# EUROPEAN PATENT APPLICATION

(11) **EP 4 790 606 A1**
(43) Date of publication of application: **12.08.2026**
(21) Application number: 23954857.1
(22) Date of filing: 25.12.2023
(51) Int. Cl.: G06Q 10/00

(54) **TASK MANAGEMENT METHOD, PROGRAM, AND TASK MANAGEMENT SYSTEM**

(30) Priority: 03.10.2023 US 202363587599 P
(71) Applicant: Panasonic Intellectual Property Management Co., Ltd., Kadoma-shi, Osaka 571-0057 (JP)
(72) Inventor: IMAMURA, Toru, Kadoma-shi, Osaka 571-0057 (JP); IKEUCHI, Hiromu, Kadoma-shi, Osaka 571-0057 (JP); KUROYAMA, Kazuhiro, Kadoma-shi, Osaka 571-0057 (JP); ASAI, Sara, Kadoma-shi, Osaka 571-0057 (JP); INATOMI, Yasuaki, Kadoma-shi, Osaka 571-0057 (JP); NII, Yusuke, Kadoma-shi, Osaka 571-0057 (JP); KOBAYASHI, Hiroaki, Kadoma-shi, Osaka 571-0057 (JP)
(74) Representative: Grünecker Patent- und Rechtsanwälte PartG mbB
(86) International application number: PCT/JP2023/046455
(87) International publication number: WO 2025/074651

(57) **Abstract**

A task management method includes: determining (S11) a person in charge of performing a target task included in a plurality of tasks from among a plurality of users (U1), based on condition information indicating a condition related to a task to be performed by each of the plurality of users (U1); and outputting (S13) information indicating the target task that is associated with a user determined as the person in charge.

## Description

### [Technical Field]

The present invention relates to a task management method and the like that manages tasks to be executed by a user using devices.

### [Background Art]

For example, Patent Literature (PTL) 1 discloses a household task planning assistance apparatus. The apparatus plans a household task according to the specifications that are given by a user and includes the type, time point, and place of the household task to be executed by a domestic robot.

### [Citation List]

### [Patent Literature]

[PTL 1] Japanese Unexamined Patent Application Publication No. 2012-190073

### [Summary of Invention]

### [Technical Problem]

The present disclosure provides a task management method and the like that makes it easier to reduce the loads of managing tasks related to devices.

### [Solution to Problem]

According to an aspect of the present disclosure, a task management method includes: determining a person in charge of performing a target task included in a plurality of tasks from among a plurality of users, based on condition information indicating a condition related to a task to be performed by each of the plurality of users; and outputting information indicating the target task that is associated with a user determined as the person in charge.

According to another aspect of the present disclosure, a program causes one or more processors to execute the above-described task management method.

According to still another aspect of the present disclosure, a task management system includes: a processing unit that determines a person in charge of performing a target task included in a plurality of tasks from among a plurality of users, based on condition information indicating a condition related to a task to be performed by each of the plurality of users; and a communication unit that outputs information indicating the target task that is associated with a user determined by the processing unit as the person in charge.

### [Advantageous Effect of Invention]

The present disclosure brings about such an advantageous effect of making it easier to reduce the loads of managing tasks to be executed by a user using devices.

### [Brief Description of Drawings]

[FIG. 1]

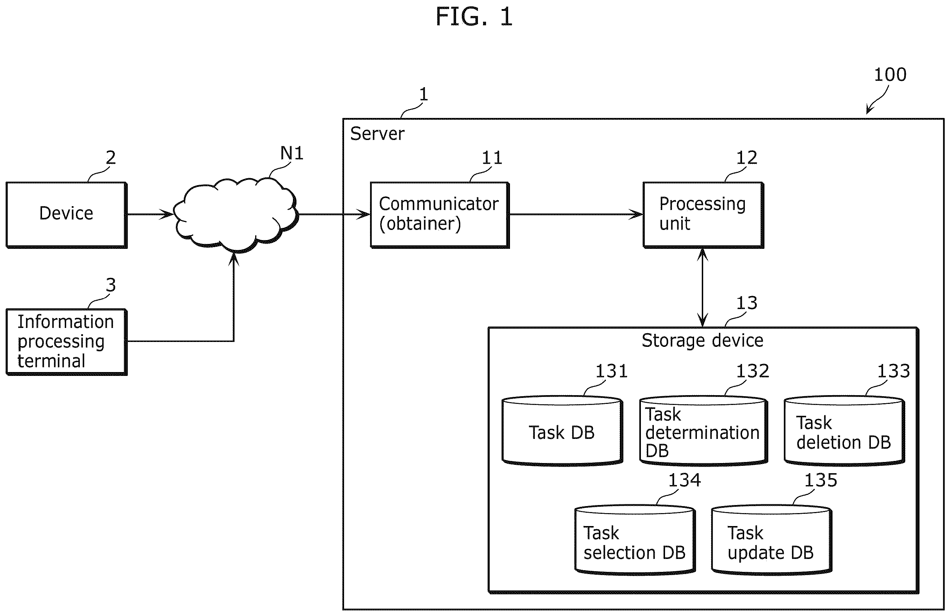

   FIG. 1 is a block diagram illustrating the general configuration including a task management system according to Embodiment 1.
[FIG. 2]

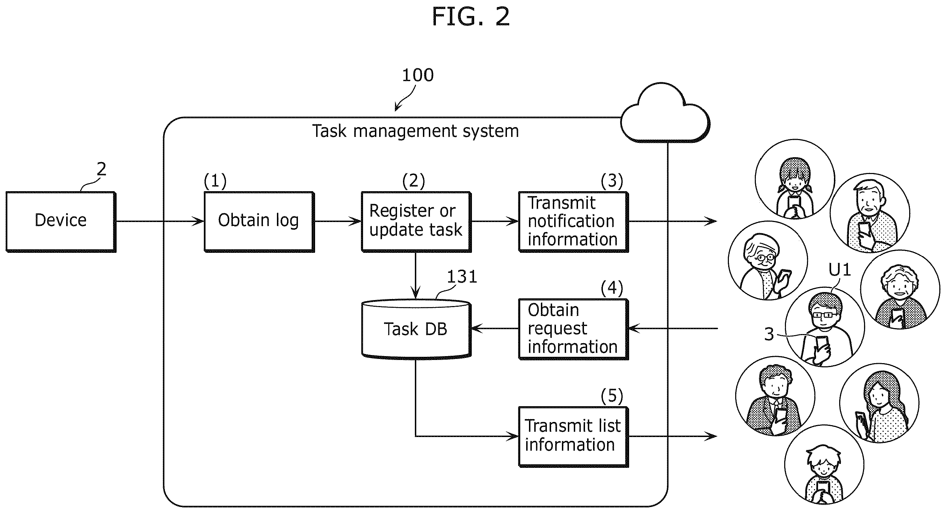

   FIG. 2 is a schematic diagram illustrating an example of a behavior that can be executed by the task management system according to Embodiment 1.
[FIG. 3]

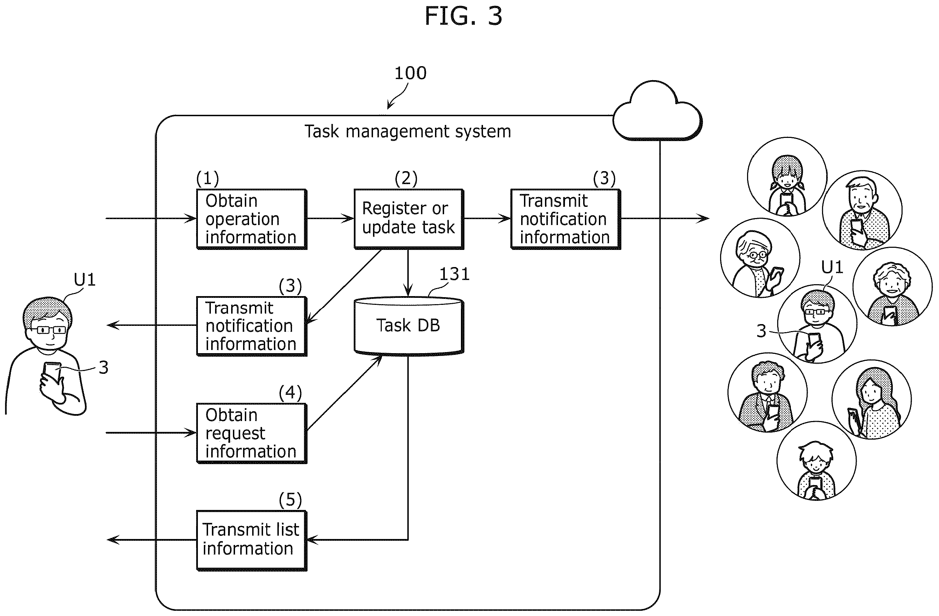

   FIG. 3 is a schematic diagram illustrating another example of a behavior that can be executed by the task management system according to Embodiment 1.
[FIG. 4]

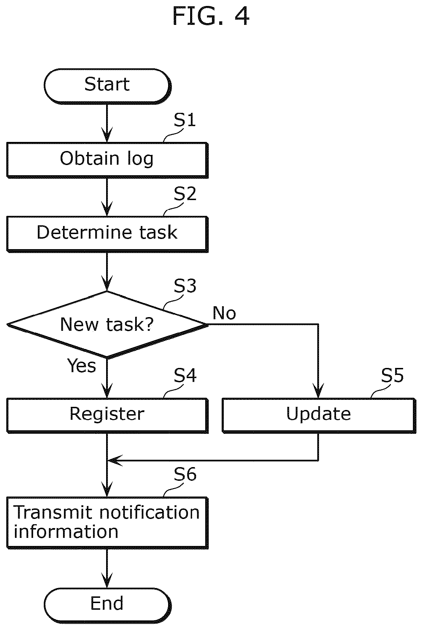

   FIG. 4 is a flowchart illustrating the basic operation example of the task management system according to Embodiment 1.
[FIG. 5]

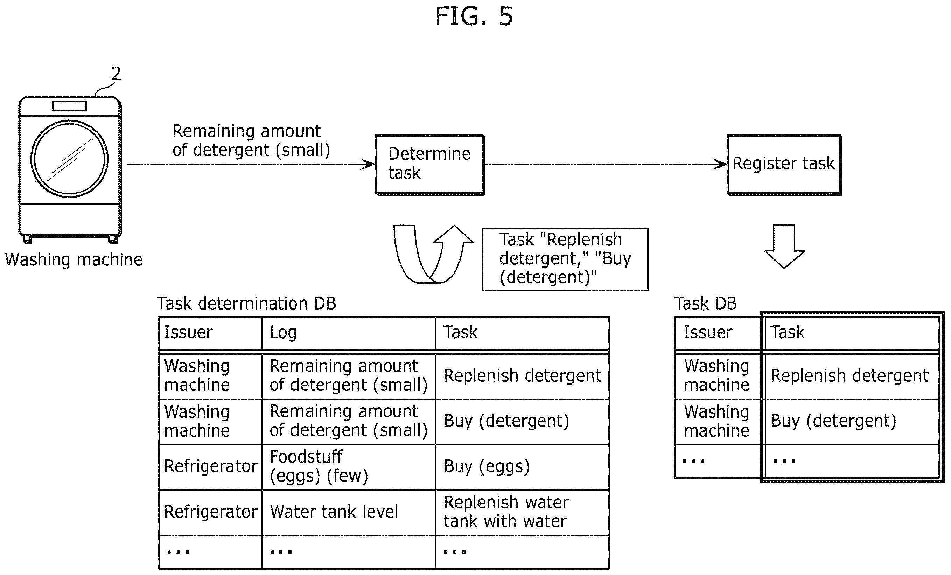

   FIG. 5 is a schematic diagram illustrating the first operation example of the task management system according to Embodiment 1.
[FIG. 6]

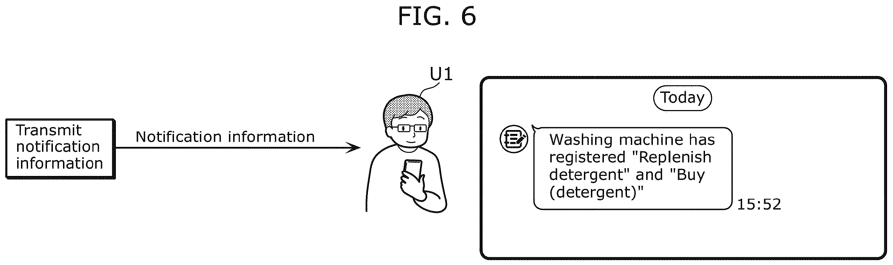

   FIG. 6 is a schematic diagram illustrating an example in which a user is notified of registered tasks in the first operation example of the task management system according to Embodiment 1.
[FIG. 7]

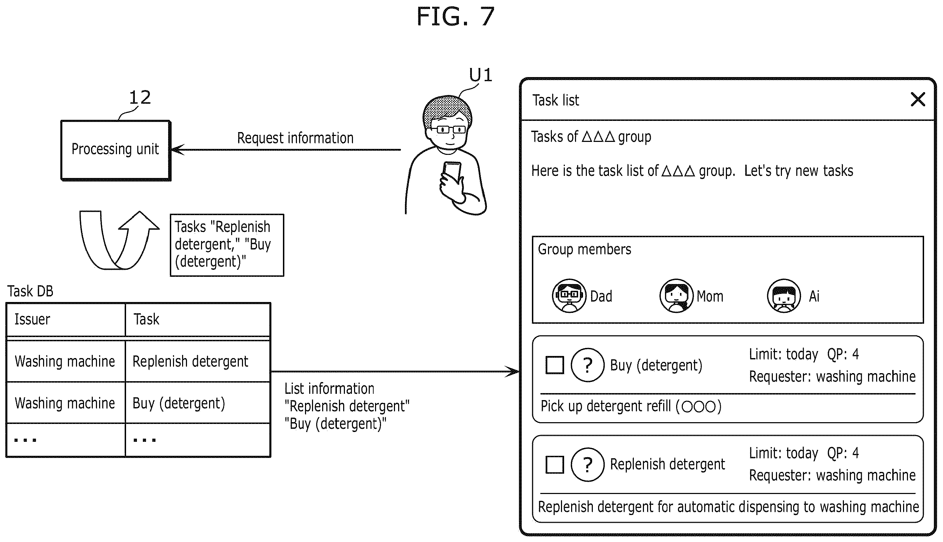

   FIG. 7 is a schematic diagram illustrating an example in which the user obtains list information in the first operation example of the task management system according to Embodiment 1.
[FIG. 8]

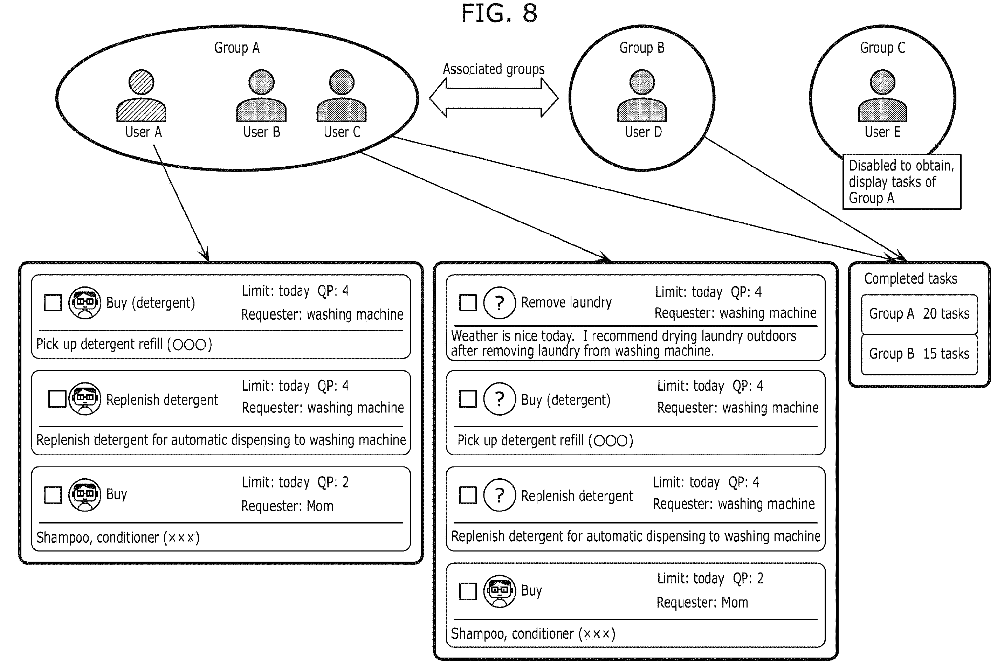

   FIG. 8 is a schematic diagram illustrating an example of the list information that can be obtained in each of groups in the first operation example of the task management system according to Embodiment 1.
[FIG. 9]

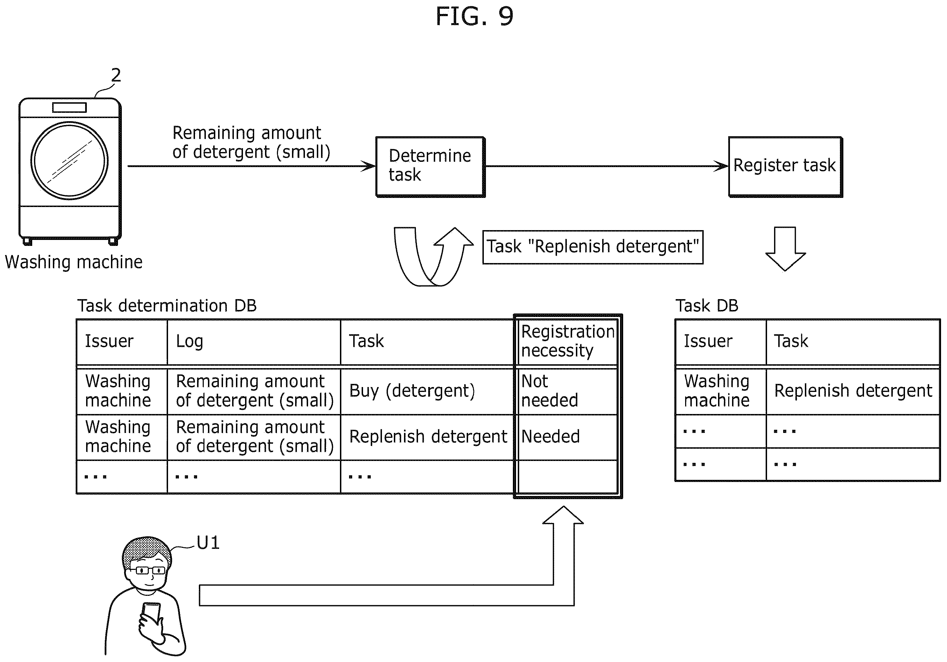

   FIG. 9 is a schematic diagram illustrating the second operation example of the task management system according to Embodiment 1.
[FIG. 10]

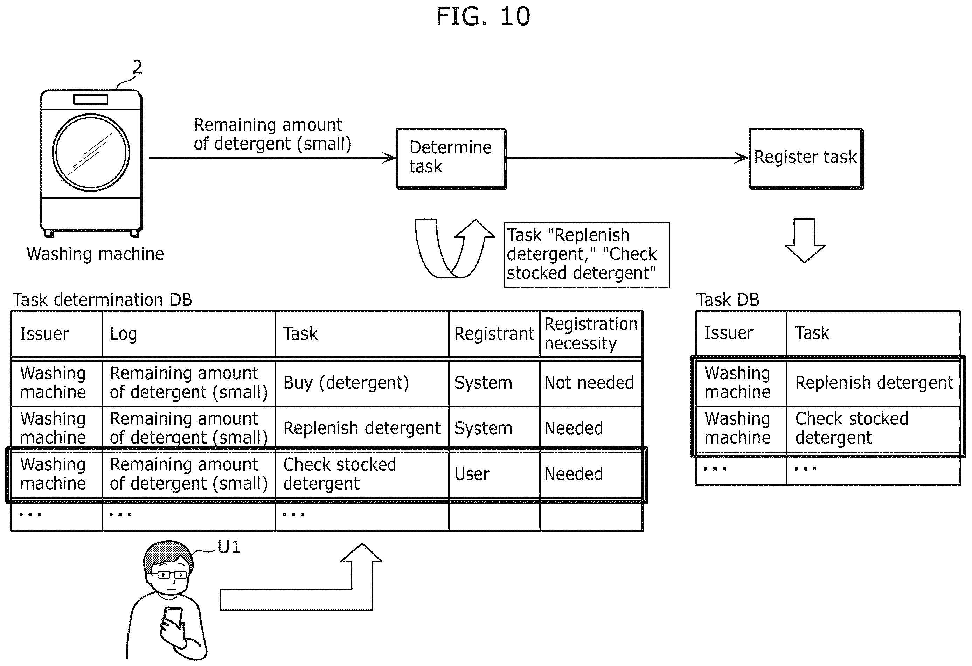

   FIG. 10 is a schematic diagram illustrating the third operation example of the task management system according to Embodiment 1.
[FIG. 11]

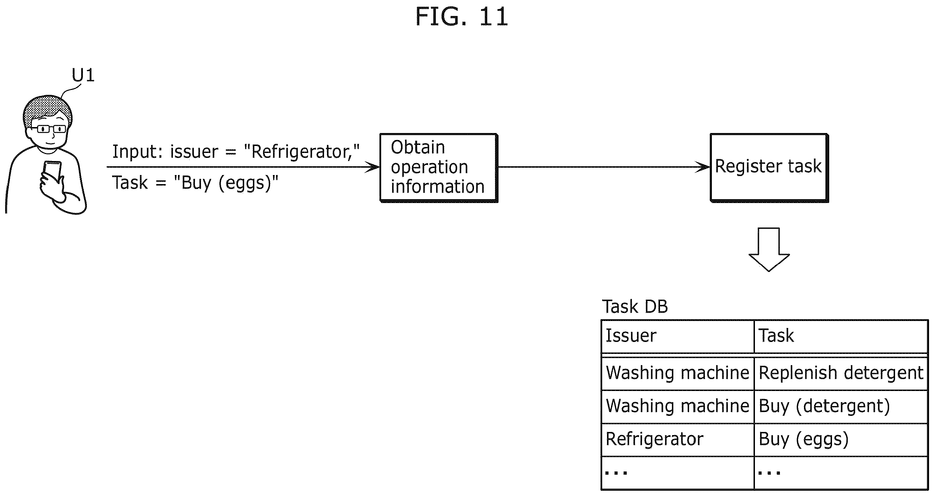

   FIG. 11 is a schematic diagram illustrating the fourth operation example of the task management system according to Embodiment 1.
[FIG. 12]

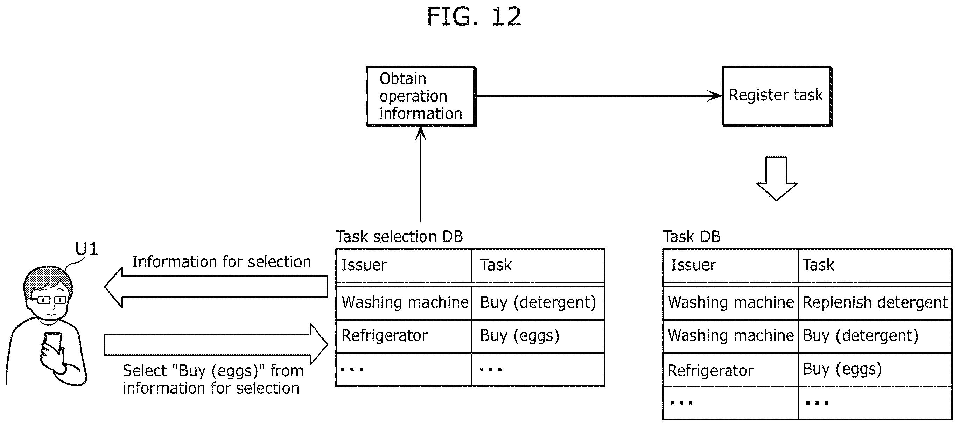

   FIG. 12 is a schematic diagram illustrating another registration method in the fourth operation example of the task management system according to Embodiment 1.
[FIG. 13]

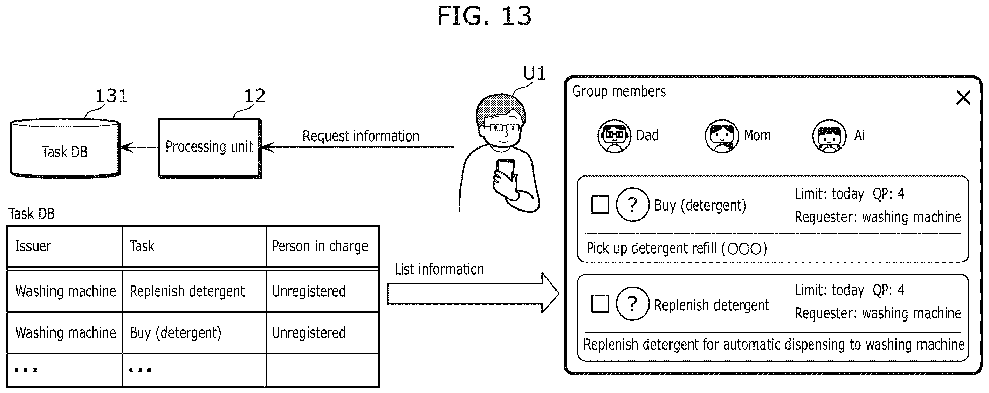

   FIG. 13 is a schematic diagram illustrating the fifth operation example of the task management system according to Embodiment 1.
[FIG. 14]

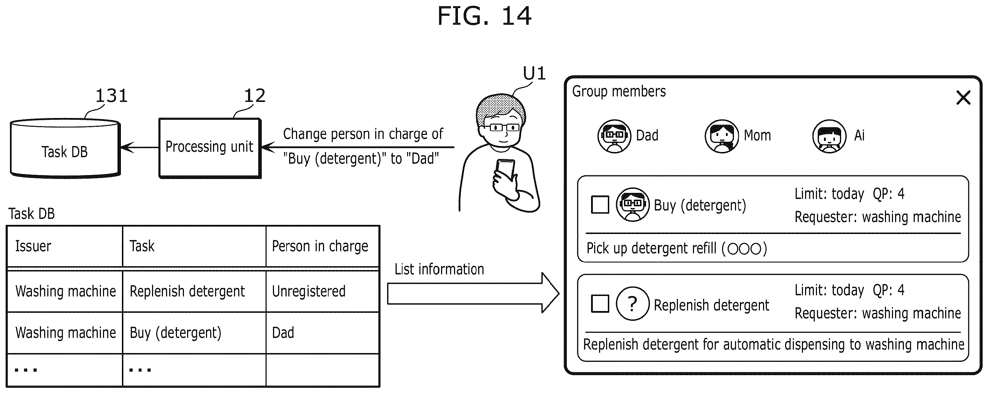

   FIG. 14 is a schematic diagram illustrating the fifth operation example of the task management system according to Embodiment 1.
[FIG. 15]

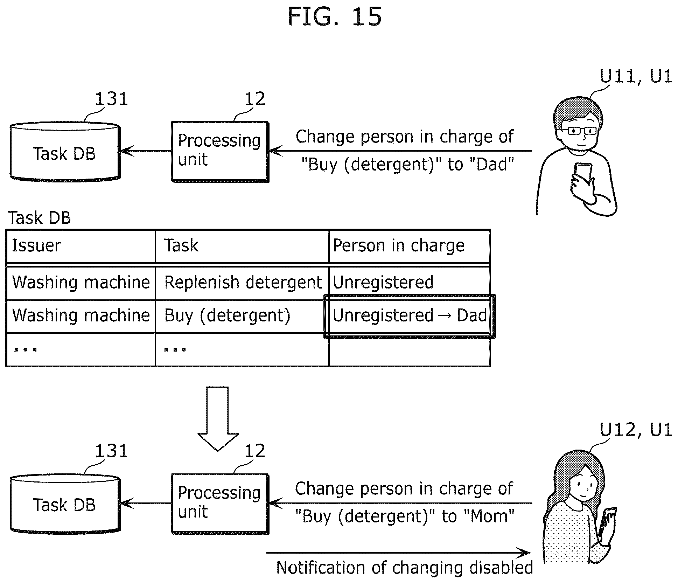

   FIG. 15 is a schematic diagram illustrating an example of the case where another user is disabled to change the person in charge of a task in the fifth operation example of the task management system according to Embodiment 1.
[FIG. 16]

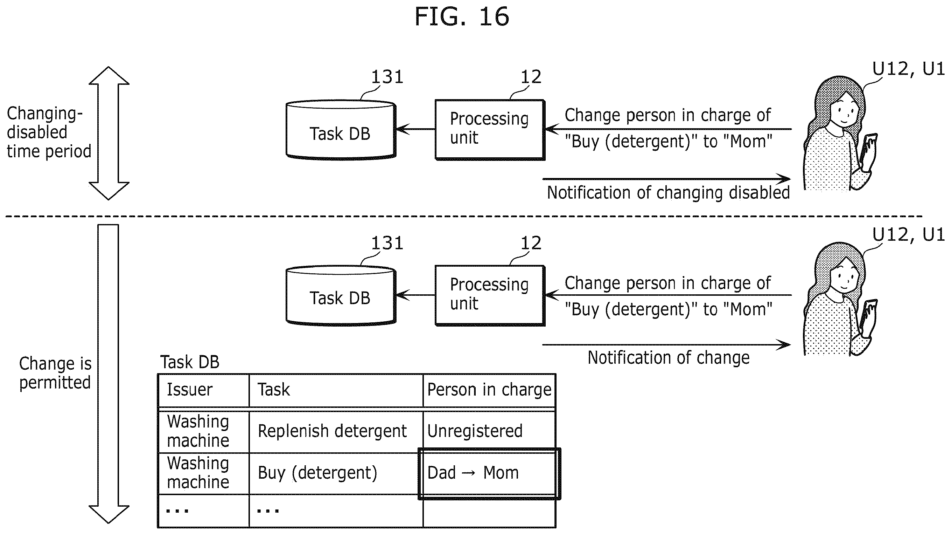

   FIG. 16 is a schematic diagram illustrating an example of the case where the other user is enabled to change the person in charge of a task in the fifth operation example of the task management system according to Embodiment 1.
[FIG. 17]

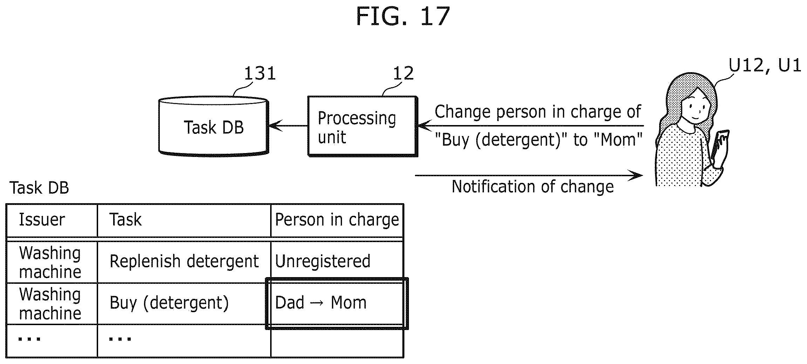

   FIG. 17 is a schematic diagram illustrating another example of the case where the other user is enabled to change the person in charge of a task in the fifth operation example of the task management system according to Embodiment 1.
[FIG. 18]

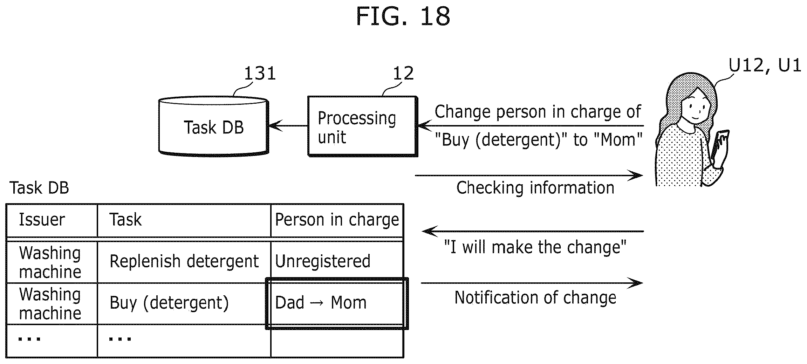

   FIG. 18 is a schematic diagram illustrating still another example of the case where the other user is enabled to change the person in charge of a task in the fifth operation example of the task management system according to Embodiment 1.
[FIG. 19]

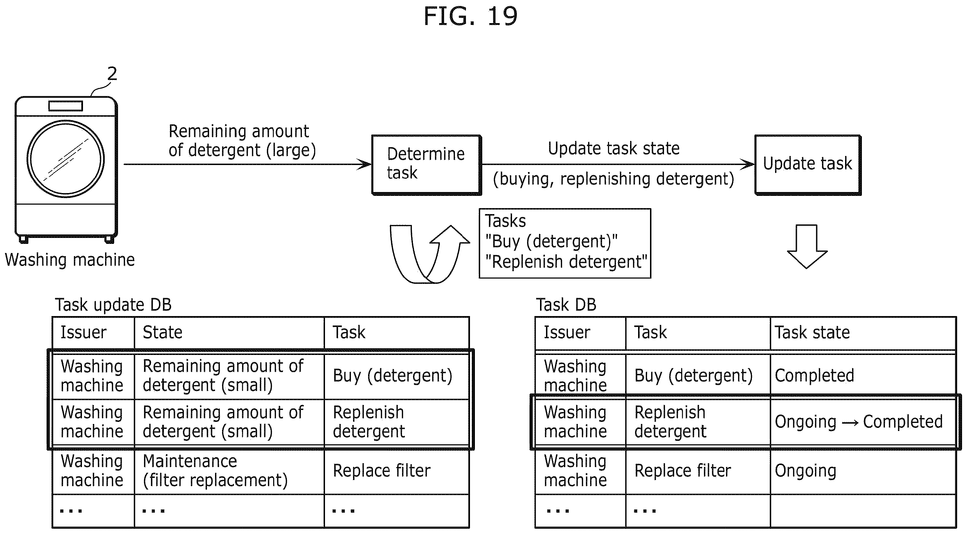

   FIG. 19 is a schematic diagram illustrating the sixth operation example of the task management system according to Embodiment 1.
[FIG. 20]

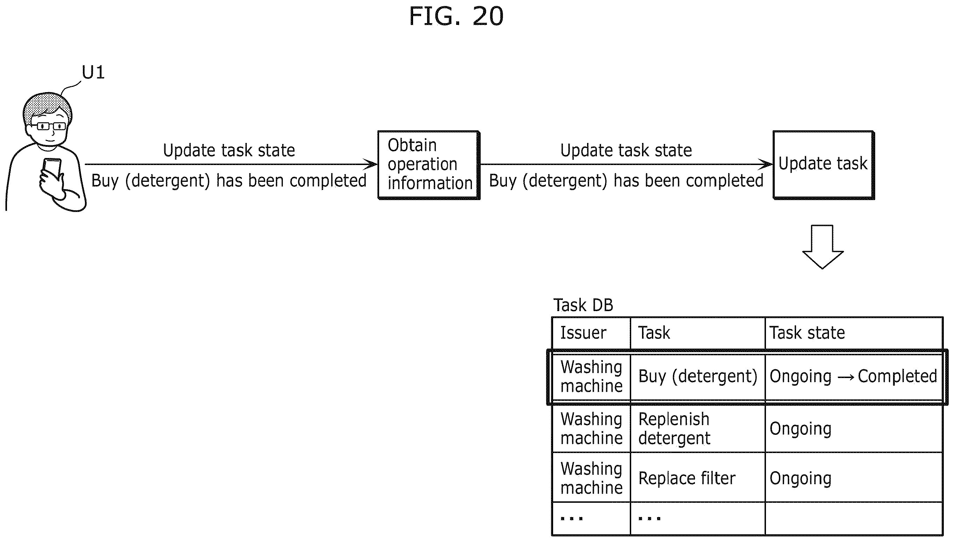

   FIG. 20 is a schematic diagram illustrating the seventh operation example of the task management system according to Embodiment 1.
[FIG. 21]

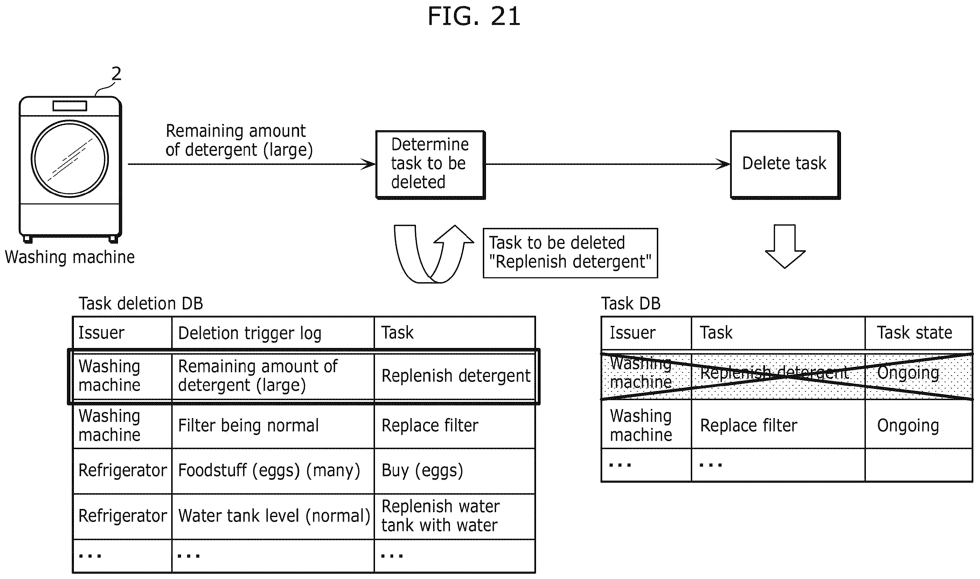

   FIG. 21 is a schematic diagram illustrating the eighth operation example of the task management system according to Embodiment 1.
[FIG. 22]

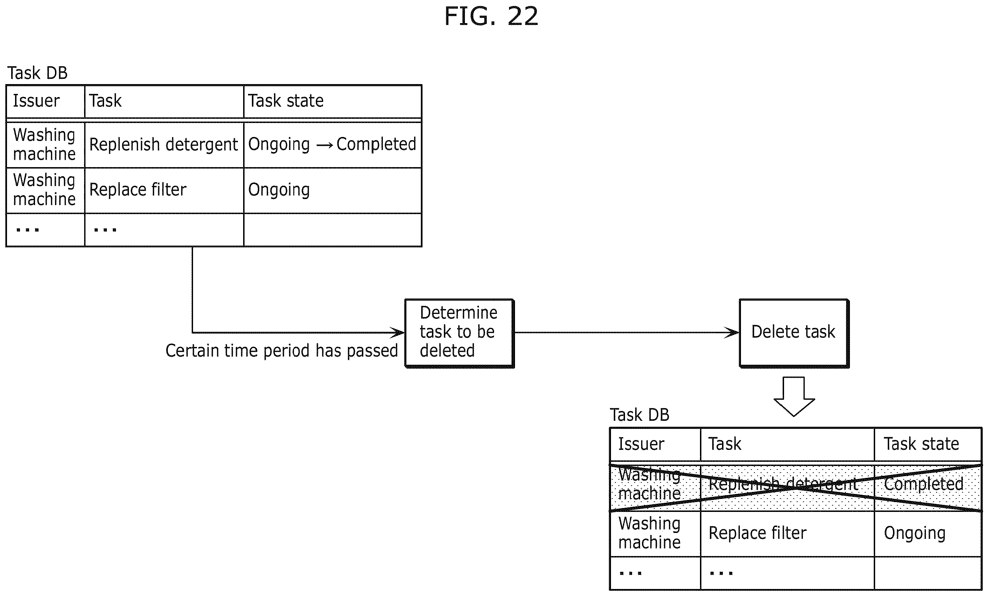

   FIG. 22 is a schematic diagram illustrating an example of deleting a task after a certain time period in the eighth operation example of the task management system according to Embodiment 1.
[FIG. 23]

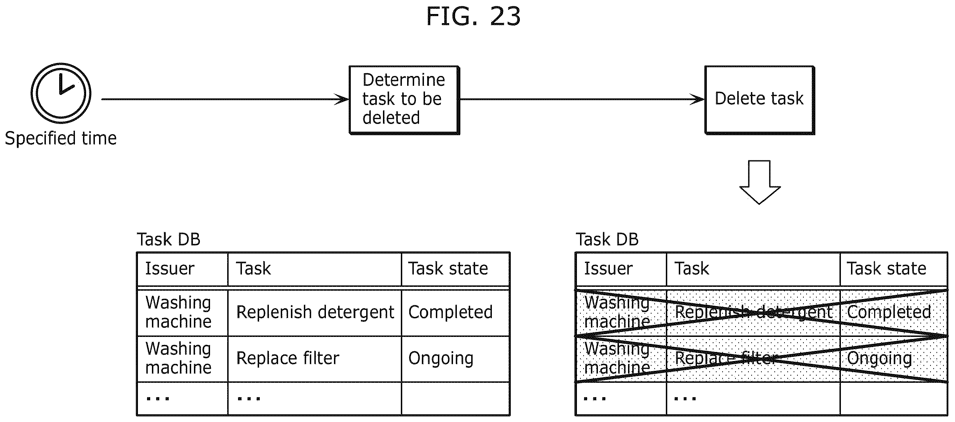

   FIG. 23 is a schematic diagram illustrating an example of deleting all tasks upon a specified time of day in the eighth operation example of the task management system according to Embodiment 1.
[FIG. 24]

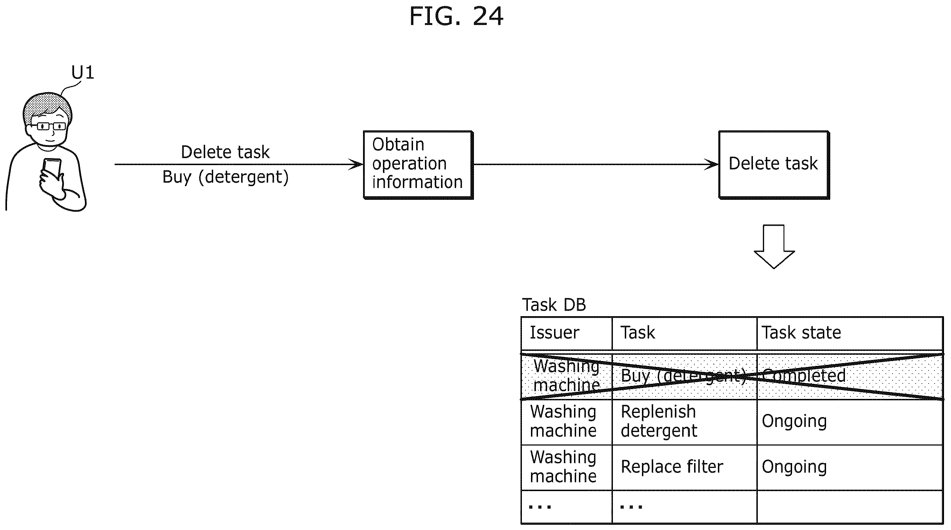

   FIG. 24 is a schematic diagram illustrating the ninth operation example of the task management system according to Embodiment 1.
[FIG. 25]

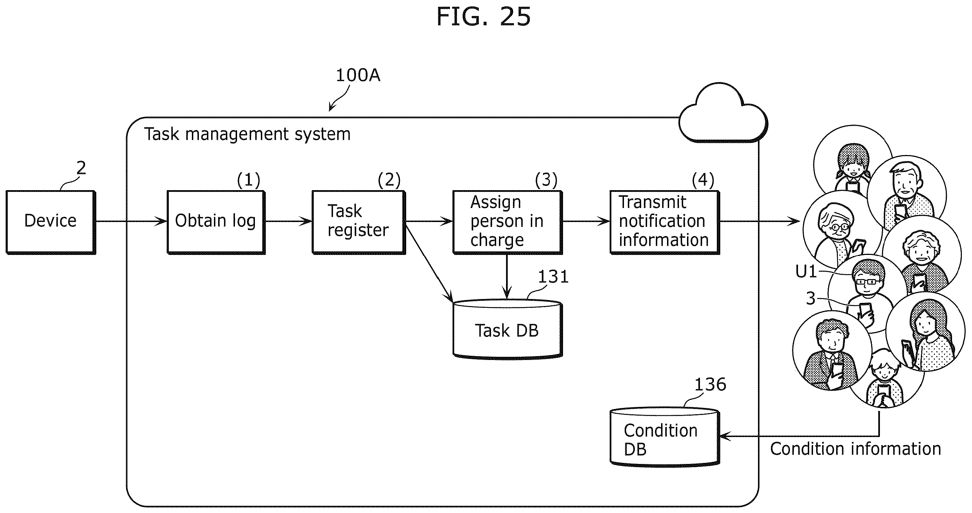

   FIG. 25 is a schematic diagram illustrating an example of a behavior that can be executed by a task management system according to Embodiment 2.
[FIG. 26]

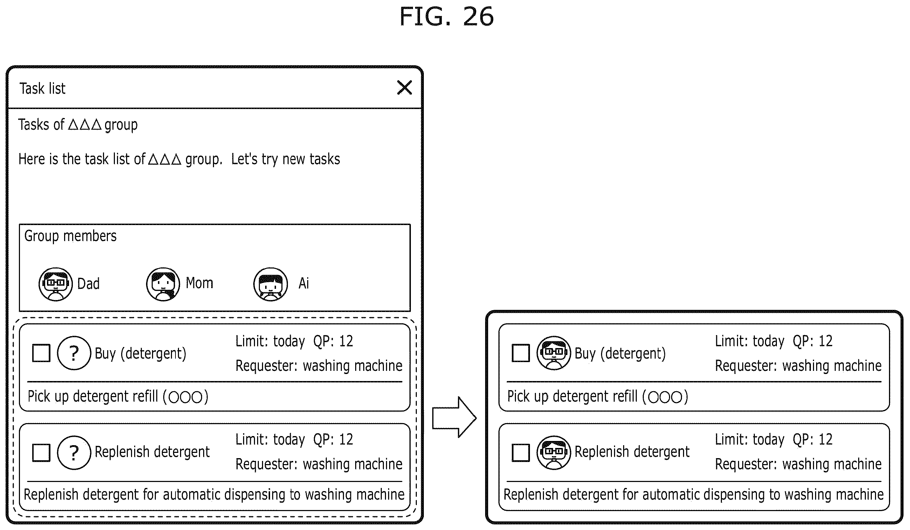

   FIG. 26 is a schematic diagram illustrating an example of the list information.
[FIG. 27]

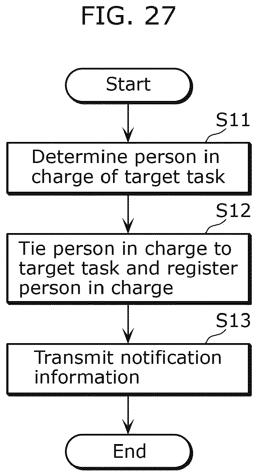

   FIG. 27 is a flowchart illustrating the basic operation example of the task management system according to Embodiment 2.
[FIG. 28]

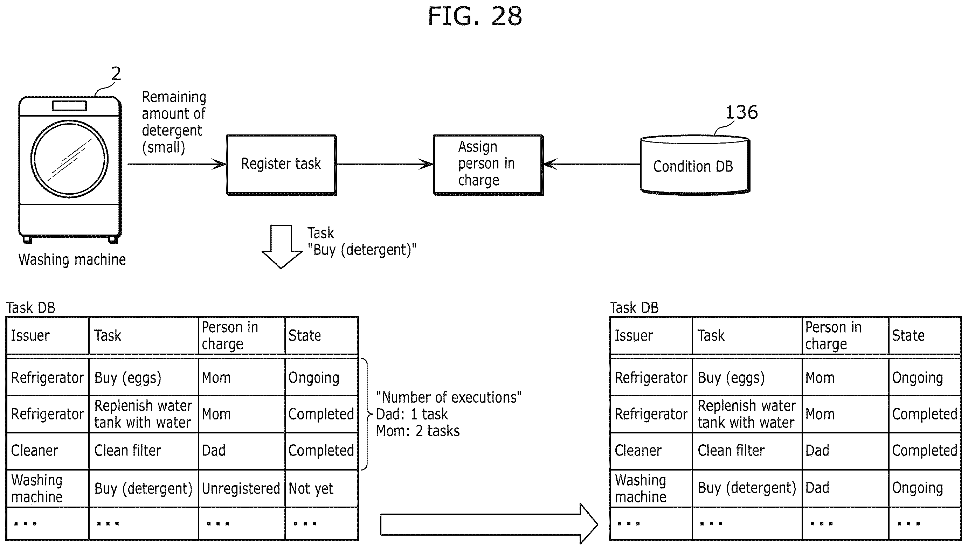

   FIG. 28 is a schematic diagram illustrating the first operation example of the task management system according to Embodiment 2.
[FIG. 29]

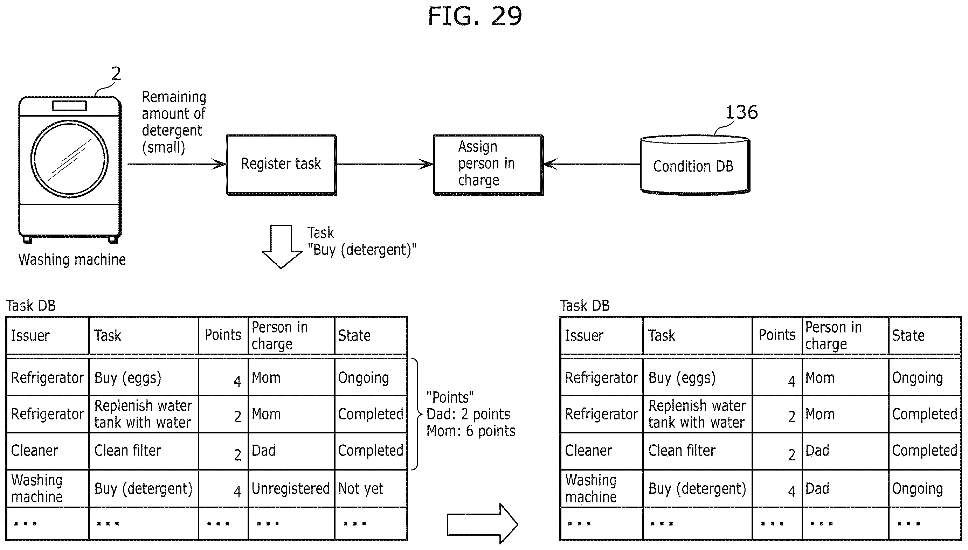

   FIG. 29 is a schematic diagram illustrating an example of the case where a person in charge is determined by a reference to points in the first operation example of the task management system according to Embodiment 2.
[FIG. 30]

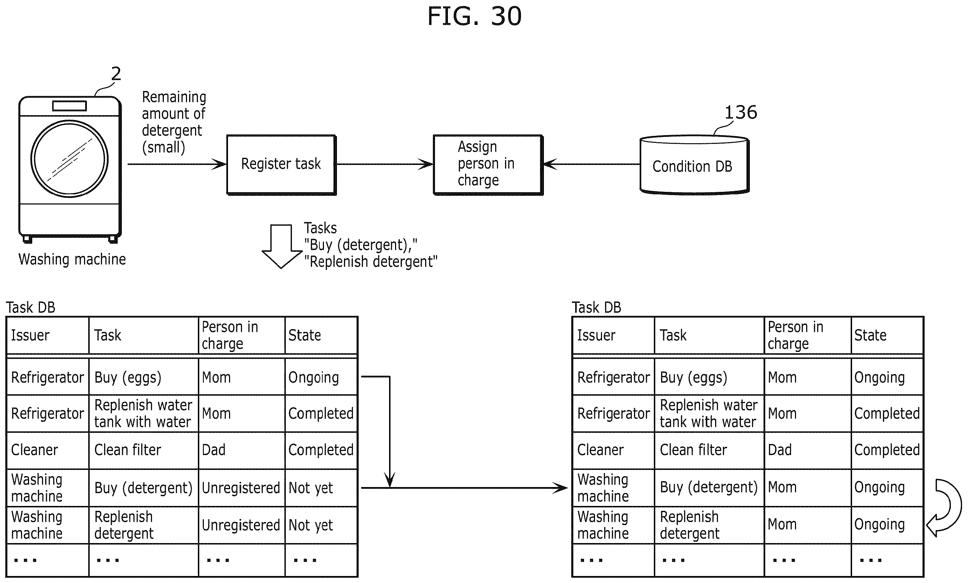

   FIG. 30 is a schematic diagram illustrating the second operation example of the task management system according to Embodiment 2.
[FIG. 31]

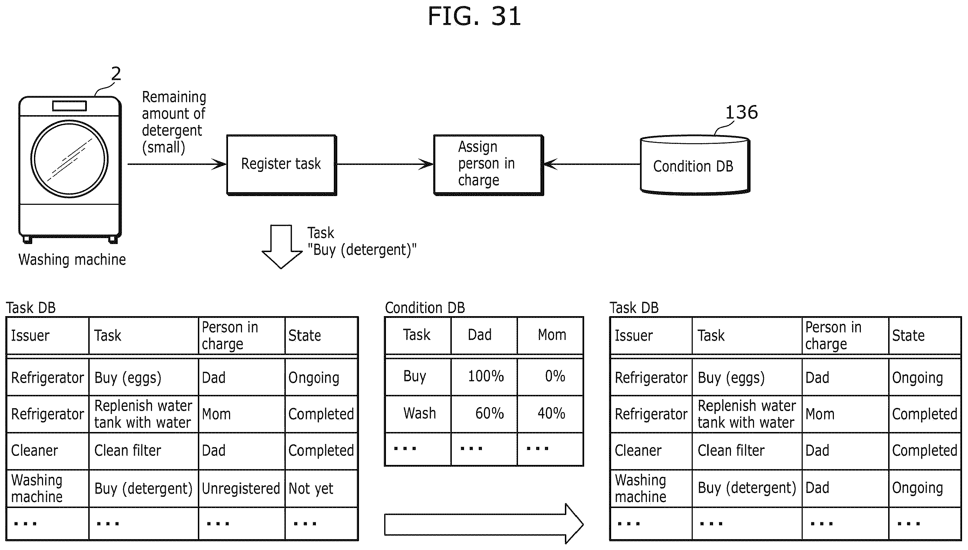

   FIG. 31 is a schematic diagram illustrating the third operation example of the task management system according to Embodiment 2.
[FIG. 32]

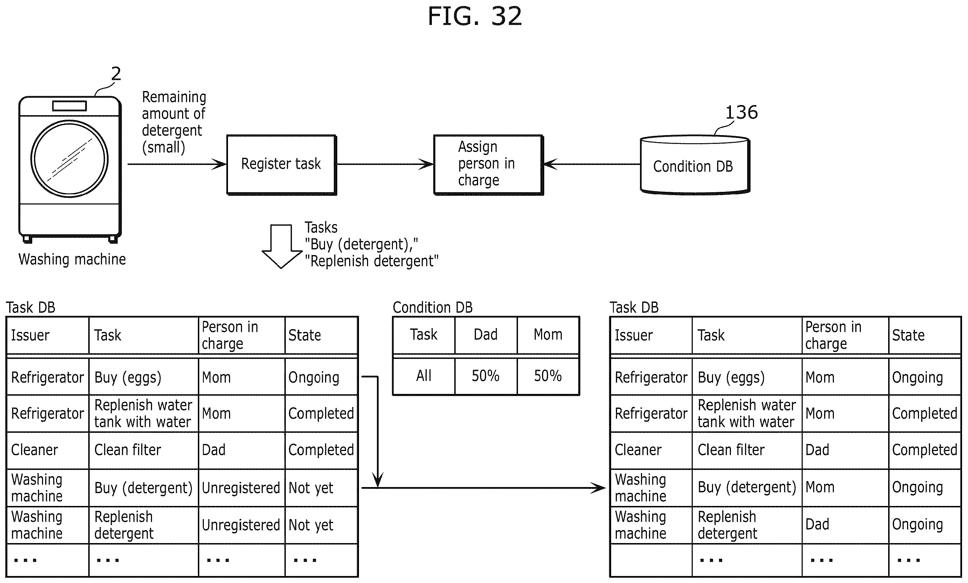

   FIG. 32 is a schematic diagram illustrating the fourth operation example of the task management system according to Embodiment 2.
[FIG. 33]

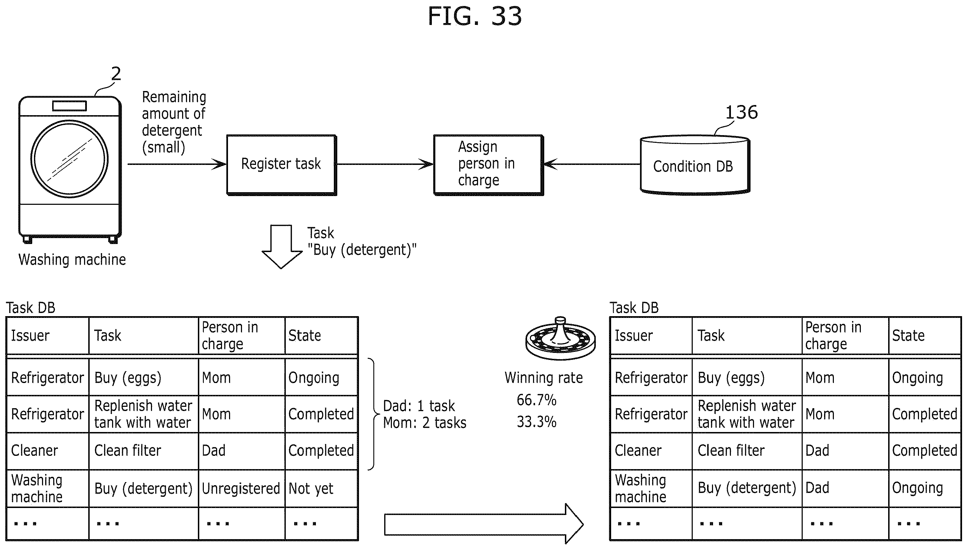

   FIG. 33 is a schematic diagram illustrating the fifth operation example of the task management system according to Embodiment 2.
[FIG. 34]

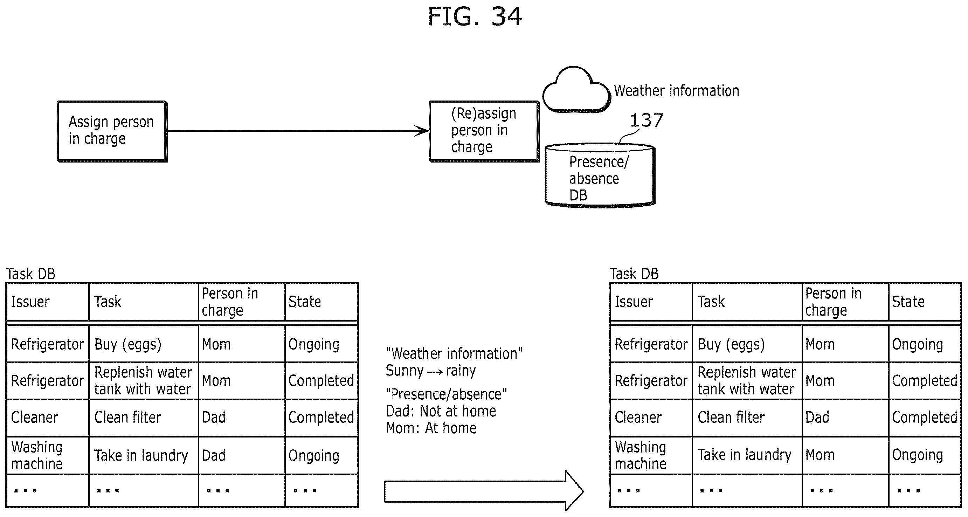

   FIG. 34 is a schematic diagram illustrating the sixth operation example of the task management system according to Embodiment 2.
[FIG. 35]

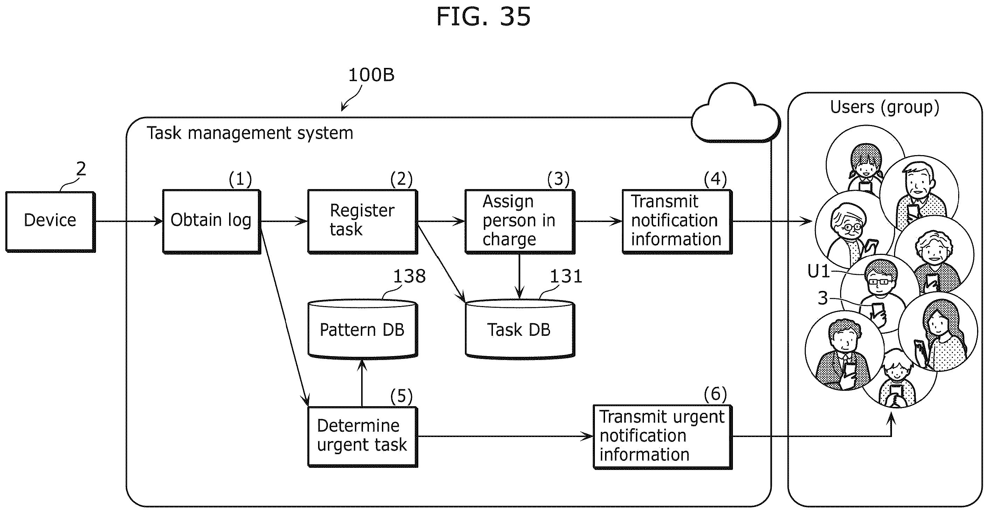

   FIG. 35 is a schematic diagram illustrating an example of a behavior that can be executed by a task management system according to Embodiment 3.
[FIG. 36]

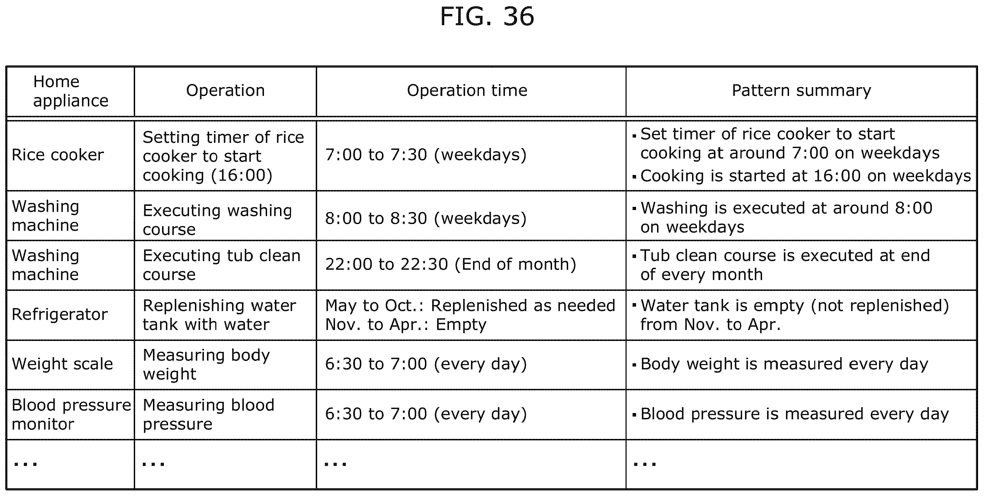

   FIG. 36 is a table illustrating an example of generating pattern information.
[FIG. 37]

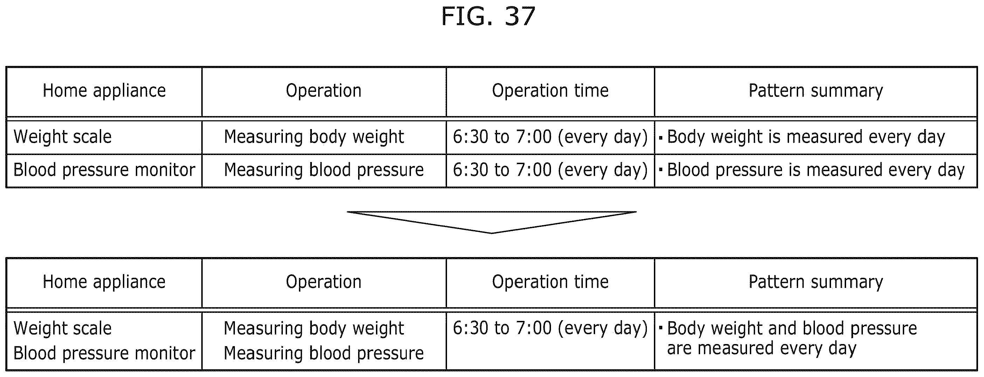

   FIG. 37 is a table illustrating another example of generating the pattern information.
[FIG. 38]

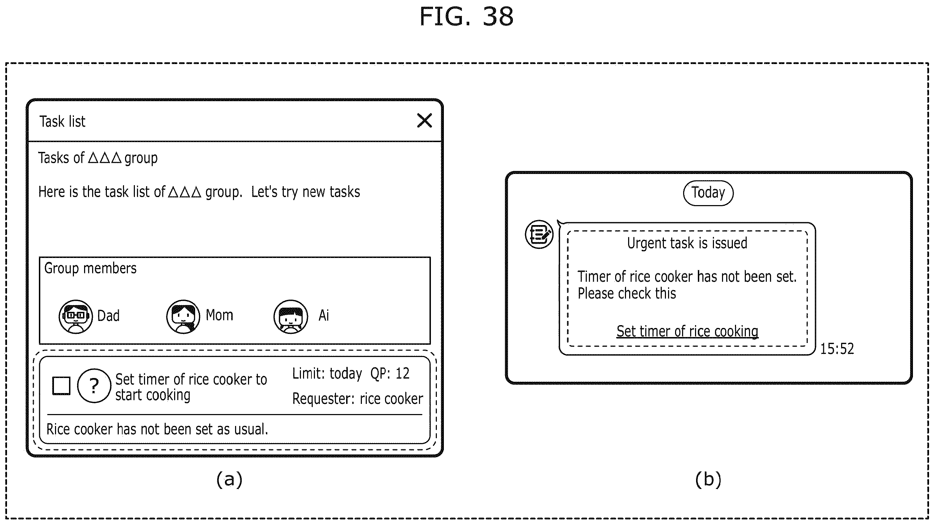

   FIG. 38 is a schematic diagram illustrating a notification example of urgent notification information in the task management system according to Embodiment 3.
[FIG. 39]

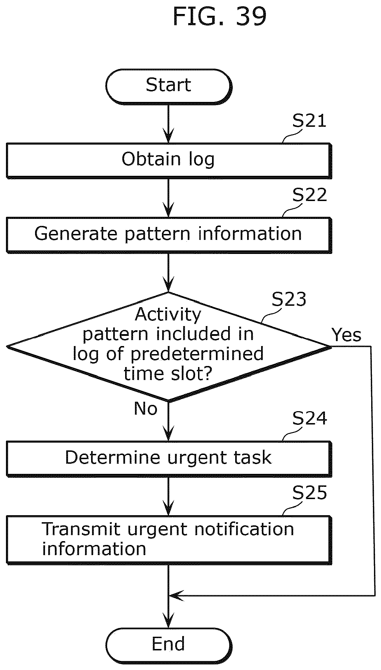

   FIG. 39 is a flowchart illustrating the basic operation example of the task management system according to Embodiment 3.
[FIG. 40]

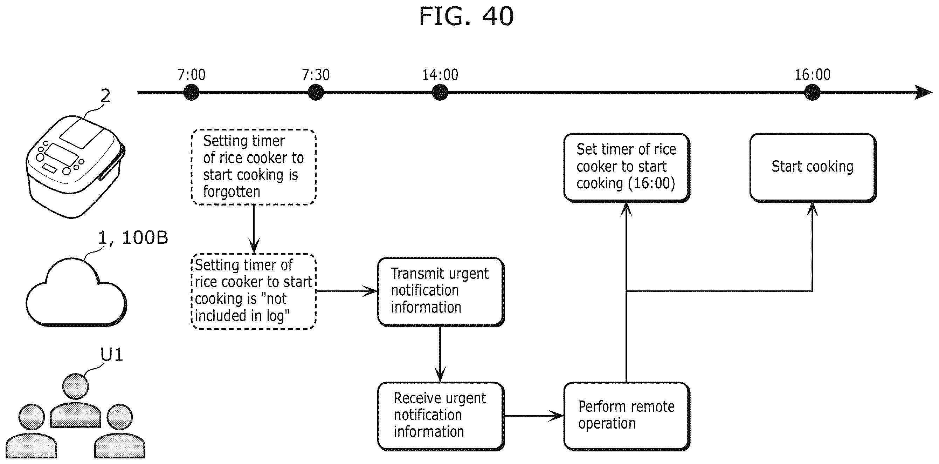

   FIG. 40 is a schematic diagram illustrating the first operation example of the task management system according to Embodiment 3.
[FIG. 41]

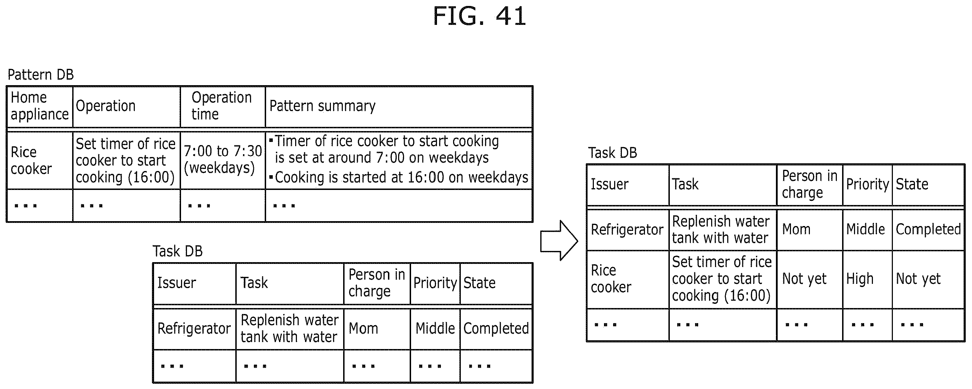

   FIG. 41 is a schematic diagram illustrating an example of the case where a determined urgent task has not been registered in the first operation example of the task management system according to Embodiment 3.
[FIG. 42]

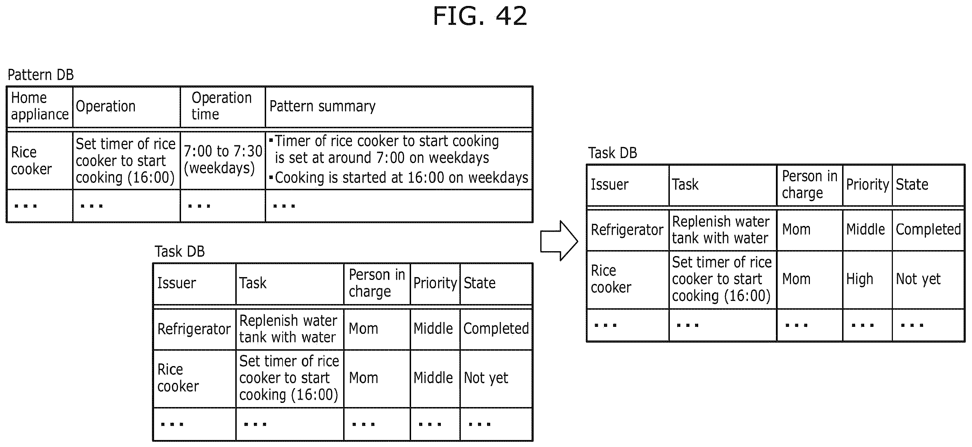

   FIG. 42 is a schematic diagram illustrating an example of the case where a determined urgent task has been registered in the first operation example of the task management system according to Embodiment 3.
[FIG. 43]

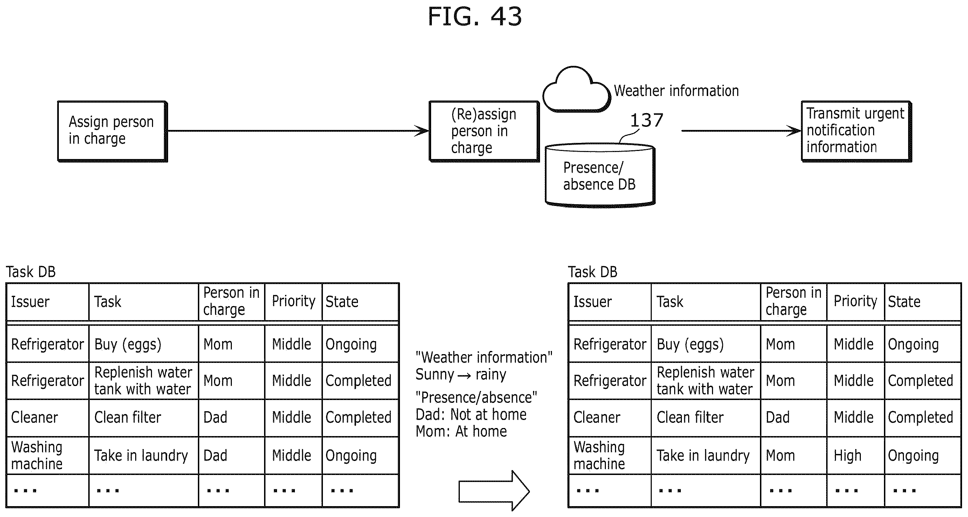

   FIG. 43 is a schematic diagram illustrating the second operation example of the task management system according to Embodiment 3.
[FIG. 44]

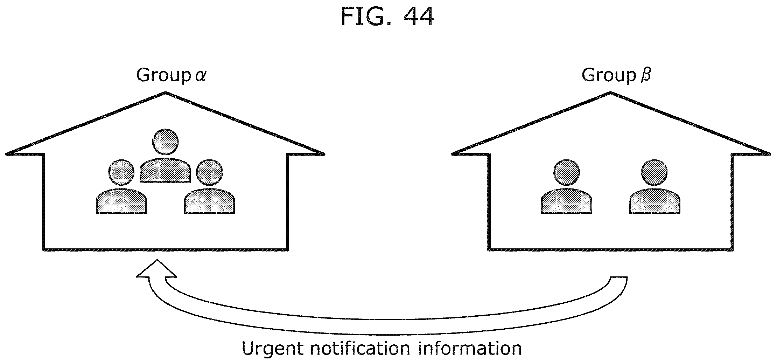

   FIG. 44 is a schematic diagram illustrating an example of the notification destination of the urgent notification information in the task management system according to Embodiment 3.

### [Description of Embodiments]

First, the present inventors' points of focus will be described below.

For example, there have been techniques of managing tasks to be executed by a user, such as household tasks or sharing the presence of the tasks among a plurality of users. For example, PTL 1 discloses a technique of planning a household task according to the specifications that are given by a user and includes the type, time point, and place of the household task to be executed by a domestic robot.

However, with such a technique as mentioned above, the registration, update, deletion, or the like of a task to be managed requires a user to manually perform an operation via a user interface (UI) provided by an application or the like, which tends to increase the load of managing a task on the user.

In view of the above, the present inventors came to conceive the present disclosure.

Hereinafter, embodiments will be described in detail with reference to the drawings as appropriate. Note that unnecessarily detailed description may be omitted. For example, detailed descriptions of well-known matters and the redundant description of a substantially identical component or configuration may be omitted. This is for preventing the following description from becoming unnecessarily redundant, thus helping those skilled in the art easily understand the description.

Note that the present inventors will provide the accompanying drawings and the following description for making those skilled in the art understand the present disclosure adequately and does not intend the accompanying drawings and the following description to restrict the subject matter recited in the claims.

### (Embodiment 1)

### [1-1. General configuration]

First, with reference to FIG. 1, a general configuration including task management system 100 according to Embodiment 1 will be described. FIG. 1 is a block diagram illustrating the general configuration including task management system 100 according to Embodiment 1. In Embodiment 1, task management system 100 is a system for managing one or more tasks related to device 2. Using information processing terminal 3, user U1 (see FIG. 2 or FIG. 3) can obtain a list of one or more tasks (hereinafter, referred to as a "task list") managed in storage device 13 (described later) from task management system 100. In addition, via information processing terminal 3, user U1 can receive the notification of a change in the one or more tasks managed in storage device 13, from task management system 100.

Device 2 is a device capable of communicating with server 1 (task management system 100) over network N1, such as the Internet. In Embodiment 1, device 2 is an Internet Of Things (IoT) device. Device 2 is, for example, a home appliance. Specifically, device 2 is, for example, a washing machine, an air conditioner, a humidifier, an air cleaner, a microwave oven, a refrigerator, a rice cooker, a robotic cleaner, a stationary television receiver, a portable television receiver, or the like. Device 2 is also, for example, a Blue-ray Disc (Registered Trademark) recorder, a digital versatile disc (DVD) (Registered Trademark) recorder, lighting equipment, an inter communication system, an electric toothbrush, a weight scale, a dryer, or the like.

Each task represents an action to be executed by user U1 who uses device 2. In Embodiment 1, each task may be any task related to device 2. Each task can include an action directly executed on device 2 by user U1, such as removing laundry from a washing machine, and can also include an action indirectly executed on device 2 by user U1, such as purchasing detergent to be used in a washing machine. In addition, each task can include not only a household task, such as cleaning by a cleaning robot, washing by a washing machine, or rice cooking by a rice cooker, that is, a task related to an action for living a daily life at home, but also a task related to a personal action executed by user U1 in his or her daily life, such as toothbrushing using an electric toothbrush or measuring a body weight using a weight scale.

Information processing terminal 3 is a terminal possessed by user U1. Information processing terminal 3 is, for example, a smartphone, a tablet terminal, or a desktop or laptop personal computer. In Embodiment 1, user U1 can give instructions to task management system 100 and obtain information transmitted from task management system 100 by executing an application for task management system 100 installed on information processing terminal 3.

Note that user U1 can also give instructions to task management system 100 and obtain information transmitted from task management system 100 by accessing a uniform resource locator (URL) for task management system 100 via a web browser installed on information processing terminal 3.

### [1-2. Task management system]

Next, task management system 100 will be described in detail. As illustrated in FIG. 1, task management system 100 includes communicator 11, processing unit 12, and storage device 13. Note that although task management system 100 includes storage device 13 in Embodiment 1, storage device 13 need not be a constituent element of task management system 100.

In Embodiment 1, task management system 100 is implemented with server 1. Server 1 includes a processor and a memory. By the processor executing a computer program stored in the memory, components included in task management system 100 are implemented.

Task management system 100 is configured to communicate with device 2 and information processing terminal 3 over network N1. Note that although the numbers of devices 2 and information processing terminals 3 are each one in the example illustrated in FIG. 1, each of the numbers may be more than one.

Communicator 11 is a communication interface for enabling communication with device 2 and information processing terminal 3 over network N1. Through the communication with device 2, communicator 11 obtains a log related to the state of device 2. Hereinafter, communicator 11 will also be referred to as obtainer 11.

In Embodiment 1, obtainer (communicator) 11 obtains the log by receiving a signal that is transmitted from device 2 over network N1 and includes the log obtained by device 2. Note that obtainer 11 may obtain the log through communication with an external system (not illustrated) that manages device 2. In this case, obtainer 11 obtains the log by receiving a signal that is transmitted from the external system over network N1 and includes the log obtained by device 2.

Here, the log can include, as information indicating the state of device 2, information indicating a behavior executed by device 2, information indicating an operation received by device 2, or the like. The behavior executed by device 2 can include not only a behavior executed by device 2 itself but also a behavior or the like executed by an instrument included in device 2, such as a sensor.

For example, in the case where device 2 is a washing machine having the function of automatically supplying detergent, the log can include information indicating the remaining amount of the detergent. For example, in the case where device 2 is a washing machine having the function of determining the state of a filter, the log can include information indicating the state of the filter. For example, in the case where device 2 is a refrigerator, the log can include information indicating the remaining amount of water in a water tank. For example, in the case where device 2 is a refrigerator having a function of recognizing foodstuffs present in the refrigerator, the log can include information indicating the remaining amount of the foodstuffs in the refrigerator.

Based on the log obtained by obtainer (communicator) 11, processing unit 12 determines a task to be executed by user U1 using device 2. In Embodiment 1, processing unit 12 determines a task corresponding to the log by referring to first corresponding information that is stored in a task determination database (DB) 132 (described later) in storage device 13.

The first corresponding information is information indicating the correspondence relation between a log and a task. Specifically, the first corresponding information is information indicating the correspondence relation among device 2 that is the issuer of the log, the content of the log issued by device 2, and the content of a task to be executed by user U1 based on the content of the log. For example, in the case where device 2, which is the issuer, is a washing machine, the first corresponding information can include information in which the content of a log indicating that the remaining amount of detergent is small is tied to the content of a task of user U1 replenishing the detergent. For example, in the case where device 2, which is the issuer, is a washing machine, the first corresponding information can include information in which the content of a log indicating that the remaining amount of detergent is small is tied to the content of a task of user U1 buying the detergent.

As mentioned above, the task can include a task directly executed on device 2 by user U1, such as replenishing a washing machine with detergent, and can also include a task indirectly executed on device 2 by user U1, such as buying detergent with which a washing machine is to be replenished.

In Embodiment 1, processing unit 12 executes the process of registering the determined task in storage device 13 (task DB 131) (described later) or the process of updating a task registered in storage device 13 (task DB 131) to the determined task.

For example, when the type of the determined task is different from one or more types of one or more tasks registered in storage device 13 (task DB 131), processing unit 12 registers the determined task to storage device 13. In other words, when the determined task is a new task, which is different from the managed one or more tasks, processing unit 12 registers the determined task in storage device 13 as the new task.

For example, when the type of the determined task is the same as the type of a task among the one or more tasks registered in storage device 13 (task DB 131), processing unit 12 updates the content of the task among the one or more tasks to the content of the determined task. In other words, when the determined task is the same as one of one or more tasks that have already been managed, processing unit 12 updates the content of the one of the one or more tasks by overwriting the content with the content of the determined task.

In Embodiment 1, in the case where a change has occurred in the one or more tasks registered in storage device 13 (task DB 131), processing unit 12 transmits notification information indicating the change to information processing terminal 3 used by user U1. The change here can include, for example, registering a new task to storage device 13 or updating the content of a task already managed, as mentioned above.

In Embodiment 1, when communicator 11 receives, from information processing terminal 3, request information for requesting the transmission of the task list, processing unit 12 transmits list information indicating the task list registered in storage device 13 to information processing terminal 3.

Storage device 13 stores the one or more tasks. The one or more tasks stored (registered) in storage device 13 are management targets of task management system 100. In Embodiment 1, the one or more tasks stored in storage device 13 can include a task determined by processing unit 12 and a task registered by user U1 using information processing terminal 3, as described later.

In Embodiment 1, storage device 13 includes task DB 131, task determination DB 132, and task deletion DB 133. Storage device 13 further includes task selection DB 134 described later and task update DB 135 described later.

Task DB 131 stores the one or more tasks that are the management targets of task management system 100, as mentioned above. Task determination DB 132 stores the first corresponding information that is referred to by processing unit 12 when a task is determined.

Task deletion DB 133 stores second corresponding information that is referred to by processing unit 12 when a task among the one or more tasks registered in storage device 13 (task DB 131) is deleted. The second corresponding information is information indicating the correspondence relation between a log and a task to be deleted. Specifically, the second corresponding information is information indicating the correspondence relation among device 2 that is the issuer of the log, the content of the log issued by device 2, and the content of a task to be deleted based on the content of the log. For example, in the case where device 2, which is the issuer, is a washing machine, the second corresponding information can include information in which the content of a log indicating that the remaining amount of detergent is large is tied to the content of a task to be deleted of user U1 replenishing the detergent. For example, in the case where device 2, which is the issuer, is a washing machine, the second corresponding information can include information in which the content of a log indicating that the remaining amount of detergent is large is tied to the content of a task to be deleted of user U1 buying the detergent.

FIG. 2 is a schematic diagram illustrating an example of a behavior that can be executed by task management system 100 according to Embodiment 1. As illustrated in FIG. 2, (1) when obtaining a log from device 2, task management system 100 (2) determines a task based on the log and registers the determined task to task DB 131 or updates an existing task to the determined task. Then, task management system 100 (3) transmits notification information indicating that the task has been registered or updated to information processing terminal 3 of user U1. The example illustrated in FIG. 2 shows that there are a plurality of users U1, and that the notification information is transmitted to information processing terminals 3 of the plurality of users U1.

In addition, (4) when obtaining request information transmitted from information processing terminal 3 of any one of users U1, task management system 100 (5) transmits list information to information processing terminal 3 of the any one of users U1.

Task management system 100 according to Embodiment 1 is further capable of executing the following behavior. FIG. 3 is a schematic diagram illustrating another example of a behavior that can be executed by task management system 100 according to Embodiment 1. As illustrated in FIG. 3, (1) when obtaining operation information from information processing terminal 3 of user U1, task management system 100 (2) registers a task to task DB 131 or updates an existing task based on the operation information. Here, the operation information is information that is input by user U1 operating information processing terminal 3. For example, the operation information includes information for requesting the registration of a task desired by user U1 or information for requesting the update of a task desired by user U1. Then, task management system 100 (3) transmits notification information indicating that the task has been registered or updated to information processing terminal 3 of user U1. The example illustrated in FIG. 3 shows that there is one or more users U1 in addition to user U1 who transmits the operation information, and that the notification information is transmitted to information processing terminals 3 of all users U1. In addition, (4) when obtaining request information transmitted from information processing terminal 3 of any one of users U1, task management system 100 (5) transmits list information to information processing terminal 3 of the any one of users U1.

### [2. Behavior]

The operation of task management system 100 (i.e., the task management method) according to Embodiment 1 will be described in detail below.

### [2-1. Basic operation example]

First, with reference to FIG. 4, the basic operation example of task management system 100 according to Embodiment 1 will be described. FIG. 4 is a flowchart illustrating the basic operation example of task management system 100 according to Embodiment 1. Here, the description will be given assuming that task management system 100 obtains a log from device 2. The description will be given also assuming that the number of users U1 is one.

When device 2 issues the log, device 2 transmits a signal including the issued log to server 1 (task management system 100) over network N1. Accordingly, communicator (obtainer) 11 obtains the log over network N1 (S1).

Next, processing unit 12 determines a task based on the log obtained by communicator (obtainer) 11 (S2). Here, processing unit 12 determines the task corresponding to the content of the log by referring to the first corresponding information stored in storage device 13 (task determination DB 132).

When the determined task is a new task (S3: Yes), processing unit 12 registers the determined task to storage device 13 (task DB 131) (S4). When the determined task is an existing task (S3: No), processing unit 12 updates the existing task by overwriting the content of the existing task to the content of the determined task (S5).

Thereafter, processing unit 12 transmits notification information indicating that a change has occurred in the one or more tasks registered in storage device 13 (task DB 131) to information processing terminal 3 of user U1 over network N1 (S6).

Specific examples of the operation that can be executed by task management system 100 according to Embodiment 1 will be described below. Note that task management system 100 may combine a first operation example to a ninth operation example described below and execute the combined operation as appropriate.

### [2-2. First operation example]

First, with reference to FIG. 5, the first operation example of task management system 100 according to Embodiment 1 will be described. FIG. 5 is a schematic diagram illustrating the first operation example of task management system 100 according to Embodiment 1. The first operation example is a specific example of the process in which processing unit 12 determines a task based on a log obtained by communicator (obtainer) 11 and registers the determined task to storage device 13 (task DB 131).

In the example illustrated in FIG. 5, processing unit 12 obtains, from a washing machine being device 2, a log indicating "Remaining amount of detergent (small)." Based on the obtained log, processing unit 12 then determines a task by referring to the first corresponding information stored in storage device 13 (task determination DB 132). Here, processing unit 12 determines the task "Replenish detergent" and the task "Buy (detergent)," which correspond to the log "Remaining amount of detergent (small)." Processing unit 12 then registers the determined task "Replenish detergent" and task "Buy (detergent)" to storage device 13 (task DB 131).

As mentioned above, in the first operation example, processing unit 12 automatically registers a task based on an obtained log, and thus, user U1 does not need to register a task manually.

FIG. 6 is a schematic diagram illustrating an example in which user U1 is notified of the registered tasks in the first operation example of task management system 100 according to Embodiment 1. In the example illustrated in FIG. 6, processing unit 12 transmits notification information indicating that the task "Replenish detergent" and the task "Buy (detergent)" have been registered, to information processing terminal 3 of user U1. Receiving the notification information, information processing terminal 3 of user U1 displays the notification information on a display device via, for example, an instant messenger application, such as LINE (Registered Trademark). Accordingly, user U1 can recognize that new tasks have been registered.

Note that information processing terminal 3 may display the notification information on the display device via, for example, an application dedicated to task management system 100 or an application dedicated to device 2. Information processing terminal 3 may output the notification information with a voice via its built-in speaker.

FIG. 7 is a schematic diagram illustrating an example in which user U1 obtains list information in the first operation example of task management system 100 according to Embodiment 1. In the example illustrated in FIG. 7, user U1 operates information processing terminal 3 to transmit, to task management system 100, request information for requesting the transmission of a task list. When receiving the request information, processing unit 12 reads the one or more tasks registered in storage device 13 (task DB 131). Here, processing unit 12 reads the task "Replenish detergent" by the washing machine and the task "Buy (detergent)." Processing unit 12 then transmits the list information including the one or more read tasks to information processing terminal 3. When receiving the list information, information processing terminal 3 of user U1 displays the list information on the display device via, for example, the instant messenger application. Accordingly, user U1 can recognize the one or more registered tasks.

The list information includes, for each of the one or more registered tasks, information on the name of the task, the details of the task, the issuer of the task, a person in charge assigned to the task, and the difficulty level of the task. For example, the list information illustrated in FIG. 7 includes information on the name of the task "Buy (detergent)," the content of the task "Please buy detergent refill (○○○)," the issuer of the task "Requester: Washing machine," the icon with an interrogation mark indicating that no person in charge has been assigned to the task, and the difficulty level of the task "QP: 4." The list information illustrated in FIG. 7 also includes the name of the group "ΔΔΔ" and one or more icons representing one or more members of the group to which user U1 belongs.

Here, in the case where there are a plurality of users U1, and each of the plurality of users U1 belongs to any one of a plurality of groups, both the content of the notification information and the content of the list information may differ among the plurality of groups. A specific example of list information that can be obtained in each of the plurality of groups will be described below.

FIG. 8 is a schematic diagram illustrating an example of the list information that can be obtained in each of the groups in the first operation example of task management system 100 according to Embodiment 1. In the example illustrated in FIG. 8, three users U1: "User A," "User B," and "User C" belong to "Group A," one user U1: "User D" belongs to "Group B," and one user U1: "User E" belongs to "Group C." In addition, "Group A" and "Group B" are associated groups, while "Group C" is a group unrelated to both "Group A" and "Group B." As the specific example, it is assumed that "Group A" is a given family, "Group B" is, for example, a family with which the given family has kinship or friendship ties, and "Group C" is a third party.

As illustrated in FIG. 8, from the standpoint of "User A," "User A" can obtain and browse list information including the content of the one or more tasks to which "User A" is assigned as a person in charge. In addition, both "User B" and "User C" belonging to "Group A," the same group as "User A," can obtain and browse the list information including the content of one or more tasks to be executed by "Group A."

Since "User D" belongs to the different group from "Group A," "User D" cannot obtain and browse the list information including the content of the one or more tasks to be executed by "Group A." However, since "User D" belongs to "Group B," which is associated with "Group A," "User D" can obtain and browse the list information including the summary of the one or more tasks to be executed by "Group A." In the example illustrated in FIG. 8, the summary includes information indicating the number of completed tasks among the one or more tasks to be executed by "Group A" and the number of completed tasks among one or more tasks to be executed by "Group B." Note that the summary can be obtained and browsed by "User A," "User B," and "User C," who belong to "Group A."

Since "User E" belongs to the different group from "Group A" and belongs to the group unrelated to "Group A," "User E" cannot obtain and browse the list information regarding "Group A."

Note that notification information regarding "Group A" is transmitted to information processing terminals 3 of "User A," "User B," and "User C" belonging to "Group A" but is not transmitted to information processing terminals 3 of "User D" belonging to "Group B" and "User E" belonging to "Group C."

### [2-3. Second operation example]

Next, with reference to FIG. 9, the second operation example of task management system 100 according to Embodiment 1 will be described. FIG. 9 is a schematic diagram illustrating the second operation example of task management system 100 according to Embodiment 1. The second operation example differs from the first operation example in that processing unit 12 determines a task by referring to necessity information indicating whether the automatic registration of a task that has been preset by user U1 is needed.

In the example illustrated in FIG. 9, user U1 operates information processing terminal 3 to transmit the necessity information to task management system 100 before processing unit 12 obtains a log from a washing machine being device 2. When obtaining the necessity information, processing unit 12 updates the first corresponding information stored in storage device 13 (task determination DB 132) based on the obtained necessity information. Here, processing unit 12 updates the first corresponding information such that "Registration necessity" of the task "Buy (detergent)" is set to be "Not needed," and that "Registration necessity" of the task "Replenish detergent" is set to be "Needed."

Processing unit 12 thereafter obtains, from the washing machine being device 2, a log indicating "Remaining amount of detergent (small)," as in the first operation example. Based on the obtained log, processing unit 12 then determines a task by referring to the first corresponding information stored in storage device 13 (task determination DB 132). Here, processing unit 12 determines the task "Replenish detergent," which corresponds to the log indicating "Remaining amount of detergent (small)," and whose "Registration necessity" is set to be "Needed." Processing unit 12 then registers the determined task "Replenish detergent" to storage device 13 (task DB 131).

As mentioned above, in the second operation example, it is possible to automatically register only a task desired by user U1 to storage device 13 (task DB 131).

### [2-4. Third operation example]

Next, with reference to FIG. 10, the third operation example of task management system 100 according to Embodiment 1 will be described. FIG. 10 is a schematic diagram illustrating the third operation example of task management system 100 according to Embodiment 1. The third operation example differs from the second operation example in that user U1 operates information processing terminal 3 to manually register a task to be subjected to the automatic registration.

In the example illustrated in FIG. 10, before processing unit 12 obtains a log from a washing machine being device 2, user U1 operates information processing terminal 3 to transmit operation information indicating a task "Check stocked detergent" corresponding to the log of the washing machine indicating "Remaining amount of detergent (small)" to task management system 100. When obtaining the operation information, processing unit 12 updates the first corresponding information stored in storage device 13 (task determination DB 132) based on the obtained operation information. Here, processing unit 12 updates the first corresponding information in such a manner as to add the task "Check stocked detergent" corresponding to the log of the washing machine indicating "Remaining amount of detergent (small)."

Processing unit 12 thereafter obtains, from the washing machine being device 2, a log indicating "Remaining amount of detergent (small)," as in the second operation example. Based on the obtained log, processing unit 12 then determines a task by referring to the first corresponding information stored in storage device 13 (task determination DB 132). Here, processing unit 12 determines the task "Replenish detergent" and the task "Check stocked detergent," which correspond to the log indicating "Remaining amount of detergent (small)," and whose "Registration necessity" is set to be "Needed." Processing unit 12 then registers the determined task "Replenish detergent" and task "Check stocked detergent" to storage device 13 (task DB 131).

As mentioned above, in the third operation example, it is possible for user U1 to manually set a task to be subjected to the automatic registration.

### [2-5. Fourth operation example]

Next, with reference to FIG. 11, the fourth operation example of task management system 100 according to Embodiment 1 will be described. FIG. 11 is a schematic diagram illustrating the fourth operation example of task management system 100 according to Embodiment 1. The fourth operation example differs from the first operation example to the third operation example in that user U1 operates information processing terminal 3 to manually register a task.

In the example illustrated in FIG. 11, user U1 operates information processing terminal 3 to transmit, to task management system 100, operation information indicating that device 2, which is the issuer, is "Refrigerator," and the task is "Buy (eggs)." When obtaining the operation information, processing unit 12 updates the one or more tasks stored in storage device 13 (task DB 131) based on the obtained operation information. Here, processing unit 12 updates the one or more tasks in such a manner as to add the task "Buy (eggs)" for which the issuer, device 2, is "Refrigerator."

Note that in the case where task management system 100 stores one or more tasks with the occurrence frequencies that are relatively high, processing unit 12 may transmit information for selection indicating a list of the one or more tasks to information processing terminal 3 of user U1.

FIG. 12 is a schematic diagram illustrating another registration method in the fourth operation example of task management system 100 according to Embodiment 1. In the example illustrated in FIG. 12, storage device 13 includes task selection DB 134 that stores the information for selection. Then, for example, when processing unit 12 obtains operation information for requesting the transmission of the information for selection from information processing terminal 3 of user U1, processing unit 12 transmits the information for selection to information processing terminal 3. User U1 operates information processing terminal 3 to transmit the operation information indicating that user U1 has selected "Buy (eggs)" from the information for selection to task management system 100. When obtaining the operation information, processing unit 12 updates, based on the obtained operation information, the one or more tasks stored in storage device 13 (task DB 131) such that the task "Buy (eggs)" for which the issuer, device 2, is "Refrigerator."

As mentioned above, in the fourth operation example, user U1 can manually register a desired task.

### [2-6. Fifth operation example]

Next, with reference to FIG. 13 and FIG. 14, the fifth operation example of task management system 100 according to Embodiment 1 will be described. FIG. 13 and FIG. 14 are each a schematic diagram illustrating the fifth operation example of task management system 100 according to Embodiment 1. The fifth operation example differs from the first operation example to the fourth operation example in that user U1 operates information processing terminal 3 to manually assign the person in charge of a task.

In the example illustrated in FIG. 13, user U1 operates information processing terminal 3 to transmit, to task management system 100, request information for requesting the transmission of a task list. When receiving the request information, processing unit 12 transmits the list information to information processing terminal 3. When receiving the list information, information processing terminal 3 of user U1 displays the list information on the display device via, for example, the instant messenger application. Here, the list information includes the task "Replenish detergent" for a washing machine and the task "Buy (detergent)," although no person in charge is assigned to any task.

Here, as illustrated in FIG. 14, user U1 operates information processing terminal 3 to transmit, to task management system 100, operation information for requesting a change from the person in charge of the task "Buy (detergent)" to "Dad," which is user U1 himself. When obtaining the operation information, processing unit 12 updates the one or more tasks stored in storage device 13 (task DB 131) based on the obtained operation information. Here, processing unit 12 updates the one or more tasks in such a manner as to change the person in charge of the task "Buy (detergent)" to "Dad." From that point on, "Dad" is assigned to the task "Buy (detergent)" for a washing machine in the list information.

As mentioned above, in the fifth operation example, user U1 can manually set the person in charge of a task.

In the case where a person in charge has already been assigned to a given task, task management system 100 may limit the change of the person in charge of the given task as follows. In the following description, user U1 who is the person in charge already assigned to the given task will be referred to as "first user U11," and user U1 who is the other user will be referred to as "second user U12." In the following description, first user U11 is "Dad," and second user U12 is "Mom."

FIG. 15 is a schematic diagram illustrating an example of the case where user U1 who is the other user (second user U12) is disabled to change the person in charge of the task in the fifth operation example of task management system 100 according to Embodiment 1. In the example illustrated in FIG. 15, "Dad," who is first user U11, is assigned to be the person in charge of the task "Buy (detergent)" for a washing machine, as in the example illustrated in FIG. 14.

Thereafter, second user U12 operates information processing terminal 3 to transmit, to task management system 100, operation information for requesting a change from the person in charge of the task "Buy (detergent)" to "Mom," which is second user U12 herself. Then, processing unit 12 does not execute the process of changing the person in charge of the task since "Dad," who is first user U11, is assigned to be the person in charge of the task "Buy (detergent)." Processing unit 12 then transmits, to information processing terminal 3 of second user U12, information indicating that the person in charge of the task "Buy (detergent)" cannot be changed. Accordingly, second user U12 can recognize that a person in charge has already been assigned to the task "Buy (detergent)," and that the person in charge cannot be changed.

Even in the case where a person in charge has already been assigned to a given task, task management system 100 may permit the change of the person in charge of the task if a predetermined condition is satisfied. In other words, when a second condition is satisfied in the case where first user U11 is assigned to be the person in charge of a task among the one or more tasks stored in storage device 13, processing unit 12 may permit the person in charge of the task to be changed from first user U11 to second user U12.

FIG. 16 is a schematic diagram illustrating an example of the case where the other user (second user U12) is enabled to change the person in charge of a task in the fifth operation example of task management system 100 according to Embodiment 1. In the example illustrated in FIG. 16, the second condition is that a predetermined time period (changing-disabled time period) has passed since first user U11 is assigned to a given task. The changing-disabled time period may be set in advance or may be set by user U1 operating information processing terminal 3 as appropriate.

As illustrated in FIG. 16, in the case where second user U12 requests task management system 100 to change the person in charge of the task "Buy (detergent)" to "Mom," who is second user U12 herself, during the changing-disabled time period, processing unit 12 prohibits the person in charge of the task from being changed. On the other hand, in the case where second user U12 requests task management system 100 to change the person in charge of the task "Buy (detergent)" to "Mom," who is second user U12 herself, after the changing-disabled time period has passed, processing unit 12 changes the person in charge of the task to "Mom." Processing unit 12 then transmits, to information processing terminal 3 of second user U12, information indicating that the person in charge of the task "Buy (detergent)" has been changed to "Mom." Accordingly, second user U12 can recognize that the person in charge of the task "Buy (detergent)" has been changed to second user U12.

Note that even in the case where a person in charge has already been assigned to a given task, task management system 100 may permit the change of the person in charge of the task irrespective of whether the second condition is satisfied.

FIG. 17 is a schematic diagram illustrating another example of the case where the other user (second user U12) is enabled to change the person in charge of a task in the fifth operation example of task management system 100 according to Embodiment 1. As illustrated in FIG. 17, in the case where second user U12 requests task management system 100 to change the person in charge of the task "Buy (detergent)" to "Mom," who is second user U12 herself, processing unit 12 changes the person in charge of the task to "Mom" irrespective of whether the second condition is satisfied. Processing unit 12 then transmits, to information processing terminal 3 of second user U12, information indicating that the person in charge of the task "Buy (detergent)" has been changed to "Mom." Accordingly, second user U12 can recognize that the person in charge of the task "Buy (detergent)" has been changed to second user U12.

When task management system 100 obtains operation information that is transmitted from information processing terminal 3 of second user U12 and is for requesting the change of the person in charge of a task who has already been assigned to the task, task management system 100 may transmit, to information processing terminal 3, checking information for checking with second user U12 whether second user U12 really intends to change the person in charge.

FIG. 18 is a schematic diagram illustrating still another example of the case where the other user (second user U12) is enabled to change the person in charge of a task in the fifth operation example of task management system 100 according to Embodiment 1. In the case where second user U12 requests task management system 100 to change the person in charge of the task "Buy (detergent)" to "Mom," which is second user U12 herself, processing unit 12 transmits checking information to information processing terminal 3. When information processing terminal 3 obtains the checking information, second user U12 operates information processing terminal 3 to transmit information indicating the intention that "I will make the change" to task management system 100. Then, processing unit 12 changes the person in charge of the task to "Mom." Processing unit 12 then transmits, to information processing terminal 3 of second user U12, information indicating that the person in charge of the task "Buy (detergent)" has been changed to "Mom."

Note that task management system 100 may limit the number of times the change of the person in charge of a task is permitted during, for example, a predetermined period (e.g., several hours or several days) rather than indefinitely permitting the change of the person in charge of the task.

### [2-7. Sixth operation example]

Next, with reference to FIG. 19, the sixth operation example of task management system 100 according to Embodiment 1 will be described. FIG. 19 is a schematic diagram illustrating the sixth operation example of task management system 100 according to Embodiment 1. The sixth operation example differs from the first operation example to the fifth operation example in that processing unit 12 determines, based on a log obtained by communicator (obtainer) 11, a completed task among the one or more tasks registered in storage device 13 (task DB 131) and automatically updates the state of the completed task to "Completed."

In the example illustrated in FIG. 19, processing unit 12 obtains, from a washing machine being device 2, a log indicating "Remaining amount of detergent (large)." Based on the obtained log, processing unit 12 then determines whether a task has been completed, by referring to the second corresponding information stored in storage device 13 (task update DB 135).

The second corresponding information is information indicating the correspondence relation between a log and a task for which the state is to be updated to "Completed." Specifically, the second corresponding information is information indicating the correspondence relation among device 2 that is the issuer of the log, the state of device 2, and the content of a task to be updated to "Completed" based on the content of the log. Here, processing unit 12 determines the task "Buy (detergent)" and the task "Replenish detergent," which correspond to the log "Remaining amount of detergent (large)" as completed tasks. Processing unit 12 then updates the state of the task "Replenish detergent," for which the state is "Ongoing" to "Completed" among the one or more tasks registered in storage device 13 (task DB 131).

As mentioned above, in the sixth operation example, processing unit 12 automatically updates the state of a completed task to "Completed" based on an obtained log, and thus, user U1 does not need to manually change the state of the task to "Completed."

### [2-8. Seventh operation example]

Next, with reference to FIG. 20, the seventh operation example of task management system 100 according to Embodiment 1 will be described. FIG. 20 is a schematic diagram illustrating the seventh operation example of task management system 100 according to Embodiment 1. The seventh operation example differs from the first operation example to the sixth operation example in that user U1 operates information processing terminal 3 to manually update the state of a task to "Completed."

In the example illustrated in FIG. 20, user U1 operates information processing terminal 3 to transmit, to task management system 100, operation information indicating that the task "Buy (detergent)" has been completed. When obtaining the operation information, processing unit 12 updates the one or more tasks stored in storage device 13 (task DB 131) based on the obtained operation information. Here, processing unit 12 updates the one or more tasks in such a manner as to change the state of the task "Buy (detergent)" for which the issuer, device 2, is "Washing machine" from "Ongoing" to "Completed."

As mentioned above, in the seventh operation example, user U1 can manually update the state of a completed task to "Completed."

### [2-9. Eighth operation example]

Next, with reference to FIG. 21, the eighth operation example of task management system 100 according to Embodiment 1 will be described. FIG. 21 is a schematic diagram illustrating the eighth operation example of task management system 100 according to Embodiment 1. The eighth operation example differs from the first operation example to the seventh operation example in that processing unit 12 determines, based on a log obtained by communicator (obtainer) 11, a task to be deleted among the one or more tasks registered in storage device 13 (task DB 131) and automatically deletes, from storage device 13, the determined task to be deleted.

In other words, when a task among the one or more tasks registered in storage device 13 (task DB 131) satisfies a predetermined condition (first condition), processing unit 12 deletes the task from storage device 13. The first condition includes that the task is determined as being completed based on the log obtained.

In the example illustrated in FIG. 21, processing unit 12 obtains, from a washing machine being device 2, a log indicating "Remaining amount of detergent (large)." Based on the obtained log, processing unit 12 then determines a task to be deleted by referring to the second corresponding information stored in storage device 13 (task deletion DB 133). Here, processing unit 12 determines the task "Replenish detergent," which corresponds to the log "Remaining amount of detergent (large)" as being completed and determines the task as the task to be deleted. Processing unit 12 then deletes the determined task "Replenish detergent" among the one or more tasks registered in storage device 13 (task DB 131).

As mentioned above, in the eighth operation example, processing unit 12 automatically deletes a completed task based on an obtained log, and thus, user U1 does not need to manually delete the task.

Rather than deleting a task from storage device 13 (task DB 131) immediately after determining that the task has been completed, task management system 100 may delete the task from storage device 13 after a certain time period (e.g., several hours or several days, etc.) has passed since the task is determined as being completed.

FIG. 22 is a schematic diagram illustrating an example of deleting a task after the certain time period in the eighth operation example of task management system 100 according to Embodiment 1. The certain time period may be set in advance or may be set by user U1 operating information processing terminal 3 as appropriate. In the example illustrated in FIG. 22, when the certain time period has passed since the task "Replenish detergent" for a washing machine is determined as being completed, processing unit 12 determines the task as the task to be deleted and deletes the determined task from storage device 13 (task DB 131). Accordingly, it is easier to avoid the situation where user U1 is not able to recognize which task has already been completed when looking at the list information, in comparison to the case where the task is deleted immediately after the task is completed.

Task management system 100 may delete, from storage device 13 (task DB 131), all the one or more registered tasks registered in storage device 13 upon a predetermined time (e.g., 12 o'clock, etc.), irrespective of whether the tasks have been completed.

FIG. 23 is a schematic diagram illustrating an example of deleting all tasks upon a specified time of day (the predetermined time) in the eighth operation example of task management system 100 according to Embodiment 1. The specified time of day may be set in advance or may be set by user U1 operating information processing terminal 3 as appropriate. In the example illustrated in FIG. 23, upon the specified time of day, processing unit 12 determines all the tasks registered in storage device 13 (task DB 131) as tasks to be deleted and deletes the determined tasks from storage device 13. Accordingly, user U1 does not need to manually delete all the registered tasks.

### [2-10. Ninth operation example]

Next, with reference to FIG. 24, the ninth operation example of task management system 100 according to Embodiment 1 will be described. FIG. 24 is a schematic diagram illustrating the ninth operation example of task management system 100 according to Embodiment 1. The ninth operation example differs from the first operation example to the eighth operation example in that user U1 operates information processing terminal 3 to manually delete a task.

In the example illustrated in FIG. 24, user U1 operates information processing terminal 3 to transmit, to task management system 100, operation information indicating that the task "Buy (detergent)" is to be deleted. When obtaining the operation information, processing unit 12 updates the one or more tasks stored in storage device 13 (task DB 131) based on the obtained operation information. Here, processing unit 12 updates the one or more tasks in such a manner as to delete the task "Buy (detergent)" for which the issuer, device 2, is "Washing machine."

As mentioned above, in the ninth operation example, user U1 can manually delete a completed task.

### [3. Advantageous effects, etc.]

Advantageous effects of task management system 100 (the task management method) according to Embodiment 1 will be described below. As mentioned above, task management system 100 (the task management method) according to Embodiment 1 obtains a log related to the state of device 2 and automatically determines, based on the obtained log, a task to be executed by user U1 who uses device 2. Therefore, task management system 100 (the task management method) according to Embodiment 1 brings about such advantageous effects that user U1 does not need to manually register or update a task on the UI provided by the application or the like, and thus it is easier to reduce the load of managing tasks.

### (Embodiment 2)

### [1. Overview]

With reference to FIG. 25, the overview of task management system 100A according to Embodiment 2 will be described below. FIG. 25 is a schematic diagram illustrating an example of a behavior that can be executed by task management system 100A according to Embodiment 2. In the following description, the description of points of task management system 100A according to Embodiment 2 common to task management system 100 according to Embodiment 1 will be omitted as appropriate.

In Embodiment 2, processing unit 12 of task management system 100A determines the person in charge of a task to be executed by any one of a plurality of users U1 based on condition information indicating conditions of the plurality of users U1 regarding tasks. The plurality of users U1 constitute, for example, a family. In Embodiment 2, processing unit 12 determines the person in charge of the task by referring to the condition information stored in storage device 13 (task DB 131 or condition DB 136, etc.).

Note that, in Embodiment 2, the task with the person in charge who is to be determined by processing unit 12 (hereinafter, also referred to as a "target task") is a task that is determined based on a log obtained by obtainer (communicator) 11 in task management system 100 according to Embodiment 1 (i.e., a task automatically registered to storage device 13 (task DB 131) or a task in storage device 13 (task DB 131) automatically updated). Naturally, the task with the person in charge who is to be determined by processing unit 12 can include a task that user U1 manually registers to storage device 13 by operating information processing terminal 3.

The condition information is information indicating a condition for automatically assigning any one of the plurality of users U1 to the task. The condition information may be set in advance or may be set by user U1 operating information processing terminal 3 as appropriate, as illustrated in FIG. 25.

For example, the condition information can include information indicating the degrees of execution of one or more tasks other than target tasks by the plurality of users U1. The degrees of execution can each include, for example, the number of executions of one or more tasks, the difficulty level (points) of one or more tasks, or the like.

For example, the condition information can include information indicating the assignment status of an associated task by each of the plurality of users U1. The associated task is a task associated with the target task. For example, the associated task can include a task related to device 2 that is the same as device 2, which is the issuer, of the target task, a task to be executed at the same place as that of the target task, or the like.

For example, the condition information can include information indicating the category of a task to be assigned to each of the plurality of users U1. For example, the task "Buy (eggs)" and the task "Buy (detergent)" are in the same category.

For example, the condition information can include information indicating a win or loss of a game in which the plurality of users U1 participate to play for the person in charge of a task. The game is a game in which each user U1 cannot directly influence whether he or she will win or lose, such as roulette, and that is executed on information processing terminal 3 of each user U1.

As illustrated in FIG. 25, (1) when obtaining a log from device 2, task management system 100A (2) determines a task based on the log and registers the determined task to task DB 131. Note that these processes of (1) and (2) need not be executed by task management system 100A. Task management system 100A also (3) determines the person in charge of the determined task (a target task) based on the condition information. Task management system 100A then (4) transmits, to information processing terminal 3 of user U1, notification information indicating that the task and its person in charge have been registered. The example illustrated in FIG. 25 shows that there are a plurality of users U1, and that the notification information is transmitted to information processing terminals 3 of the plurality of users U1.

Note that, as in Embodiment 1, when obtaining request information transmitted from information processing terminal 3 of any one of users U1, task management system 100A transmits list information to information processing terminal 3 of the any one of users U1. FIG. 26 is a schematic diagram illustrating an example of the list information. The left picture in FIG. 26 illustrates the list information displayed on the display device of information processing terminal 3 before a person in charge is assigned to each task. The right picture in FIG. 26 illustrates the list information displayed on the display device of information processing terminal 3 after the person in charge is assigned to each task. In the example illustrated in FIG. 26, "Dad" is automatically assigned as the person in charge of the task "Buy (detergent)" and the task "Replenish detergent" by task management system 100A.

### [2. Behavior]

The operation of task management system 100A (i.e., the task management method) according to Embodiment 2 will be described in detail below.

### [2-1. Basic operation example]

First, with reference to FIG. 27, the basic operation example of task management system 100A according to Embodiment 2 will be described. FIG. 27 is a flowchart illustrating the basic operation example of task management system 100A according to Embodiment 2. The description will be given here assuming that steps S1 and S2 in the basic operation example of task management system 100 according to Embodiment 1 have been executed. The description will be given also assuming that the number of users U1 is one.

Processing unit 12 determines the person in charge of a target task based on the condition information indicating the conditions of the plurality of users U1 regarding tasks (S11). Here, processing unit 12 determines the person in charge of the target task by referring to the condition information stored in storage device 13 (task DB 131 or condition DB 136, etc.).

Processing unit 12 then registers the determined person in charge to storage device 13 to be tied to the target task (task DB 131) (S12). Note that when updating the target task, processing unit 12 may perform the update by overwriting the person in charge of the target task with the determined person in charge.

Thereafter, processing unit 12 transmits notification information indicating that a change has occurred in the one or more tasks registered in storage device 13 (task DB 131) to information processing terminal 3 of user U1 over network N1 (S13). That is, communicator 11 outputs information indicating the target task to which the determined person in charge is tied.

Specific examples of the operation that can be executed by task management system 100A according to Embodiment 2 will be described below. Note that a first operation example to a sixth operation example shown below will be described assuming that the plurality of users U1 are two persons: "Dad" and "Mom." Task management system 100A may combine the first operation example to the sixth operation example described below and execute the combined operation as appropriate.

### [2-2. First operation example]

First, with reference to FIG. 28, the first operation example of task management system 100A according to Embodiment 2 will be described. FIG. 28 is a schematic diagram illustrating the first operation example of task management system 100A according to Embodiment 2. The first operation example is a specific example of the process in which processing unit 12 determines a person in charge based on, as the condition information, the degrees of execution of one or more tasks other than the target task by the plurality of users U1, ties the determined person in charge to the target task, and registers the person in charge to storage device 13 (task DB 131).

In the example illustrated in FIG. 28, processing unit 12 determines the task "Buy (detergent)" (target task) based on a log indicating "Remaining amount of detergent (small)" from a washing machine being device 2. Processing unit 12 then determines the person in charge of the target task by referring to the condition information stored in storage device 13 (task DB 131). Here, processing unit 12 determines the person in charge of the target task by referring to the number of executions of one or more tasks registered in task DB 131 other than the target task by each user U1. Here, the number of executions is the total of the number of tasks that have not been completed (i.e., ongoing) and the number of tasks that have been completed.

Specifically, processing unit 12 determines, as the person in charge of the target task, user U1 with the smallest number of executions of the plurality of users U1. Here, the number of executions of tasks of "Mom" is two, while the number of executions of tasks of "Dad" is one. Thus, processing unit 12 determines "Dad" as the person in charge of the task "Buy (detergent)", which is the target task. Processing unit 12 then ties "Dad," who is the determined person in charge, to the task "Buy (detergent)", which is the target task, and registers "Dad" to storage device 13 (task DB 131).

Processing unit 12 may determine the person in charge of the target task by referring to points earned by each user U1 registered in storage device 13 (task DB 131) as illustrated in FIG. 29. FIG. 29 is a schematic diagram illustrating an example of the case where the person in charge is determined by a reference to points in the first operation example of the task management system according to Embodiment 2.

As already mentioned, the points of a task indicate the difficulty level of the task. That is, processing unit 12 may determine the person in charge of the target task based on the difficulty levels of the one or more tasks other than the target task. Note that the points of each task may be set in advance or may be set by any one of the plurality of users U1 operating information processing terminal 3 as appropriate. The points of each task may be allowed to be set by only user U1 with a privilege among the plurality of users U1.

In the example illustrated in FIG. 29, processing unit 12 determines the person in charge of the target task by referring to points earned by each user U1 registered in storage device 13 (task DB 131). Specifically, processing unit 12 determines, as the person in charge of the target task, user U1 with the fewest earned points of the plurality of users U1. Here, the points earned by "Mom" is 4 + 2 = 6 points, while the points earned by "Dad" is 2 points. Thus, processing unit 12 determines "Dad" as the person in charge of the task "Buy (detergent)", which is the target task. Processing unit 12 then ties "Dad," who is the determined person in charge, to the task "Buy (detergent)", which is the target task, and registers "Dad" to storage device 13 (task DB 131).

As mentioned above, in the first operation example, the person in charge of a target task is determined based on the degree of execution of tasks by each user U1. Thus, it becomes less likely for the determination of the person in charge of each task to be biased.

### [2-3. Second operation example]

Next, with reference to FIG. 30, the second operation example of task management system 100A according to Embodiment 2 will be described. FIG. 30 is a schematic diagram illustrating the second operation example of task management system 100A according to Embodiment 2. The second operation example is a specific example of the process in which processing unit 12 determines a person in charge based on, as the condition information, the assignment status of an associated task by each of the plurality of users U1, ties the determined person in charge to the target task, and registers the person in charge to storage device 13 (task DB 131). As already mentioned, the associated task is a task associated with the target task.

In the example illustrated in FIG. 30, processing unit 12 determines the task "Buy (detergent)" (a first target task) and the task "Replenish detergent" (a second target task) based on a log indicating "Remaining amount of detergent (small)" from a washing machine being device 2. Processing unit 12 then determines the person in charge of each of the first target task and the second target task by referring to the condition information stored in storage device 13 (task DB 131). Here, processing unit 12 determines the person in charge of each of the first target task and the second target task by referring to the assignment status of an associated task by each of users U1 registered in task DB 131.

Specifically, the task "Buy (eggs)" registered in storage device 13 (task DB 131) is associated with the task "Buy (detergent)", which is the first target task, from the viewpoint of "Buy." Therefore, processing unit 12 determines "Mom," who is the person in charge of the task "Buy (eggs)" as the person in charge of the task "Buy (detergent)." In addition, the task "Buy (detergent)", which is the first target task, is associated with the task "Replenish detergent", which is the second target task, from the viewpoint of "Washing machine." Therefore, processing unit 12 further determines "Mom," who has been determined as the person in charge of the task "Buy (detergent)" as the person in charge of the task "Replenish detergent." Processing unit 12 then ties "Mom," who is the determined person in charge, to the task "Buy (detergent)", which is the first target task, and the task "Replenish detergent", which is the second target task, and registers "Mom" to storage device 13 (task DB 131).

As mentioned above, in the second operation example, it is possible to assign the same person in charge to two or more tasks that are more efficiently executed together. Thus, it is easier for the person in charge to execute the tasks efficiently.

### [2-4. Third operation example]

Next, with reference to FIG. 31, the third operation example of task management system 100A according to Embodiment 2 will be described. FIG. 31 is a schematic diagram illustrating the third operation example of task management system 100A according to Embodiment 2. The third operation example is a specific example of the process in which processing unit 12 determines a person in charge based on, as the condition information, the categories of tasks assigned to each of the plurality of users U1, ties the determined person in charge to the target task, and registers the person in charge to storage device 13 (task DB 131).

The category of the task may be set by any one of the plurality of users U1 operating information processing terminal 3 as appropriate. The category of the task may be allowed to be set by only user U1 with a privilege among the plurality of users U1.

In the example illustrated in FIG. 31, processing unit 12 determines the task "Buy (detergent)" (target task) based on a log indicating "Remaining amount of detergent (small)" from a washing machine being device 2. Processing unit 12 then determines the person in charge of the target task by referring to the condition information stored in storage device 13 (condition DB 136). Here, processing unit 12 determines the person in charge of the target task by referring to the categories of tasks assigned to each of users U1 registered in condition DB 136.

Specifically, with regard to the tasks belonging to the category "Buy," "Dad" is in charge of 100% of them, and "Mom" is in charge of none of them. With regard to the tasks belonging to the category "Wash," "Dad" is in charge of 60% of them, and "Mom" is in charge of 40% of them. Here, the task "Buy (detergent)", which is the target task, is a task belonging to the category "Buy." Thus, processing unit 12 determines "Dad" as the person in charge of the task "Buy (detergent)", which is the target task. Processing unit 12 then ties "Dad," who is the determined person in charge, to the task "Buy (detergent)", which is the target task, and registers "Dad" to storage device 13 (task DB 131).

As mentioned above, in the third operation example, the person in charge of a target task is determined based on the categories of tasks assigned to each user U1. Thus, it becomes less likely for a person in charge assigned to the target task to be displeased.

### [2-5. Fourth operation example]

Next, with reference to FIG. 32, the fourth operation example of task management system 100A according to Embodiment 2 will be described. FIG. 32 is a schematic diagram illustrating the fourth operation example of task management system 100A according to Embodiment 2. The fourth operation example is a specific example of a process as the combination of the second operation example and the third operation example.

In the example illustrated in FIG. 32, processing unit 12 determines the task "Buy (detergent)" (a first target task) and the task "Replenish detergent" (a second target task) based on a log indicating "Remaining amount of detergent (small)" from a washing machine being device 2. Processing unit 12 then determines the person in charge of each of the first target task and the second target task by referring to the condition information stored in storage device 13 (task DB 131 and condition DB 136).

Here, processing unit 12 first determines the person in charge of the first target task by referring to the assignment status of an associated task by each user U1 registered in storage device 13 (task DB 131). Specifically, the task "Buy (eggs)" registered in task DB 131 is associated with the task "Buy (detergent)", which is the first target task, from the viewpoint of "Buy." Therefore, processing unit 12 determines "Mom," who is the person in charge of the task "Buy (eggs)" as the person in charge of the task "Buy (detergent)."

Processing unit 12 next determines the person in charge of the second target task by referring to the categories of tasks assigned to each of users U1 registered in storage device 13 (condition DB 136). Specifically, with regard to the tasks belonging to the category "All," "Dad" is in charge of 50% of them, and "Mom" is in charge of 50% of them. Therefore, processing unit 12 determines "Dad" as the person in charge of the task "Replenish detergent", which is the second target task, so that the number of tasks for which "Dad" is in charge and the number of tasks for which "Mom" is in charge are at a ratio of 50%:50%. Processing unit 12 then ties "Mom," who is the determined person in charge, to the task "Buy (detergent)", which is the first target task, and "Dad," who is the determined person in charge, to the task "Replenish detergent", which is the second target task, and registers "Dad" and "Mom" to storage device 13 (task DB 131).

As mentioned above, in the fourth operation example, it is possible to assign the same person in charge to two or more tasks that are more efficiently executed together. Thus, it is easier for the person in charge to execute the tasks efficiently. In addition, in the fourth operation example, the person in charge of a target task is determined based on the categories of tasks assigned to each user U1. Thus, it becomes less likely for a person in charge assigned to the target task to be displeased.

### [2-6. Fifth operation example]

Next, with reference to FIG. 33, the fifth operation example of task management system 100A according to Embodiment 2 will be described. FIG. 33 is a schematic diagram illustrating the fifth operation example of task management system 100A according to Embodiment 2. The fifth operation example is a specific example of the process in which processing unit 12 determines a person in charge based on, as the condition information, a win or loss of a game in which the plurality of users U1 participate to play for the person in charge of the target task, ties the determined person in charge to the target task, and registers the person in charge to storage device 13 (task DB 131).

As already mentioned, the game is a game in which each user U1 cannot directly influence whether he or she will win or lose, such as roulette, and that is executed on information processing terminal 3 of each user U1. Note that the game may be a game in which each user U1 can directly influence whether he or she will win or lose, such as rock-paper-scissors, a card game, or a board game.

**In the example** illustrated in FIG. 33, processing unit 12 determines the task "Buy (detergent)" (target task) based on a log indicating "Remaining amount of detergent (small)" from a washing machine being device 2. Processing unit 12 then determines the person in charge of the target task by referring to the condition information stored in storage device 13 (task DB 131 etc.).

Specifically, processing unit 12 causes users U1 to execute the game (here, a roulette game) on their information processing terminals 3. Processing unit 12 then determines user U1 who wins (in other words, is selected in) the game as the person in charge of the target task. The winning rate (winning percentage) in the game is determined based on the number of executions of one or more tasks other than the target task by each of users U1 registered in storage device 13 (task DB 131). Here, the number of executions of tasks by "Mom" is two, and the number of executions of tasks by "Dad" is one. Thus, the winning rate of "Mom" is determined to be 33.3 (≈ 100 -100 × 2/3)%, and the winning rate of "Dad" is determined to be 66.7 (≈ 100 -100 × 1/3)%. Note that the winning rate in the game may be determined based on, for example, points earned by each user U1.

In the example illustrated in FIG. 33, "Dad" wins the game, and thus processing unit 12 determines "Dad" as the person in charge of the task "Buy (detergent)", which is the target task. Processing unit 12 then ties "Dad," who is the determined person in charge, to the task "Buy (detergent)", which is the target task, and registers "Dad" to storage device 13 (task DB 131).

As mentioned above, in the fifth operation example, the person in charge of a target task is determined based on a win or loss of a game. Thus, it becomes less likely for a person in charge assigned to the target task to be displeased.

### [2-7. Sixth operation example]

Next, with reference to FIG. 34, the sixth operation example of task management system 100A according to Embodiment 2 will be described. FIG. 34 is a schematic diagram illustrating the sixth operation example of task management system 100A according to Embodiment 2. The sixth operation example differs from the first operation example to the fifth operation example in that a person in charge has already been assigned to the target task. The sixth operation example is also a specific example of the process in which processing unit 12 determines the person in charge of the target task again based on environment information indicating a change in the environment for the target task.

The environment information can include information indicating, for example, a change in the weather in the place where the target task is to be executed, such as a change from clear weather to rainy weather. For example, processing unit 12 can obtain the information by obtaining weather information via communicator 11 from a server that provides the weather information. The environment information can include information indicating a change in presence/absence of the person in charge of the target task caused by, for example, delay in the arrival of the person in charge of the target task at home due to transportation disruption such as train delay. For example, processing unit 12 can obtain the information by obtaining, via communicator 11, position information (e.g., positioning information from a positioning system such as the global positioning system (GPS)) on information processing terminal 3 of the person in charge of the target task.

In the example illustrated in FIG. 34, "Dad" has already been assigned to be the person in charge of the task "Take in laundry" (the target task) in storage device 13 (task DB 131). Here, in the case where processing unit 12 obtains weather information indicating that the weather will change from clear weather to rainy weather, processing unit 12 determines that the target task should be preferentially executed. Processing unit 12 then determines whether the person in charge of the target task is at home by referring to presence/absence information on each user U1 stored in storage device 13 (presence/absence DB 137).

Here, "Dad," who is the person in charge of the task "Take in laundry", which is the target task, is not at home. Thus, processing unit 12 updates the person in charge of the target task by changing the person in charge of the target task to "Mom," who is at home. Processing unit 12 thereafter transmits the notification information to information processing terminal 3 of each user U1. Accordingly, "Mom" can recognize that she should execute the task "Take in laundry", which is the target task.

As mentioned above, in the sixth operation example, it is possible to change the person in charge of a target task based on a change in the environment for the target task. Thus, it is easy to cause the target task to be executed by an appropriate person in charge.

### [3. Advantageous effects, etc.]

Advantageous effects of task management system 100A (the task management method) according to Embodiment 2 will be described below. As mentioned above, task management system 100A (the task management method) according to Embodiment 2 automatically determines the person in charge of a task to be executed by any one of a plurality of users U1 (the target task) based on the condition information indicating conditions of the plurality of users U1 regarding tasks. Therefore, task management system 100A (the task management method) according to Embodiment 2 brings about such advantageous effects that user does not need to manually assign the person in charge via the UI provided by the application or the like, and thus it is easier to reduce the load of managing tasks. In addition, task management system 100A (the task management method) according to Embodiment 2 automatically assigns the person in charge to the task, thus also bringing about such advantageous effects that it is easier to avoid a situation in which user U1 assigning another user U1 to be the person in charge of the task feels stress due to a rejection from the other user U1 or a quarrel with the other user U1.

### (Embodiment 3)

### [1. Overview]

With reference to FIG. 35, the overview of task management system 100B according to Embodiment 3 will be described below. FIG. 35 is a schematic diagram illustrating an example of a behavior that can be executed by task management system 100B according to Embodiment 3. In the following description, the description of points of task management system 100B according to Embodiment 3 that are common to task management system 100 according to Embodiment 1 will be omitted as appropriate.

In Embodiment 3, processing unit 12 of task management system 100B generates, based on an obtained log, pattern information indicating an activity pattern, which is to be executed on device 2 during a predetermined time slot. In the case where the obtained log does not include the activity pattern indicated by the pattern information in the predetermined time slot, processing unit 12 determines the activity pattern as an urgent task.

The urgent task is a task to be executed by user U1 who uses device 2. More specifically, the urgent task is a task that user U1 is recommended to execute immediately. Note that, in the case where a task corresponding to the activity pattern has not been registered to storage device 13 (task DB 131), determining the urgent task refers to registering the task in storage device 13 and increasing the priority of the registered task. In the case where the task has already been registered in storage device 13, determining the urgent task refers to increasing the priority of the task.

The priority can be translated as a degree of urgency. The priority indicates the degree of whether the task should be preferentially executed by user U1. In Embodiment 3, the priority is indicated in three levels: "Low," "Middle," and "High." A task of the priority "Low" is a task that may be executed at user U1's convenience, thus being a task that need not be preferentially executed. A task of the priority "Middle" is a task that is recommended to be more preferentially executed than a task of the priority "Low." A task of the priority "High" is a task that user U1 should immediately execute, thus being a task to be most preferentially executed.

Processing unit 12 generates the pattern information by, for example, accumulating a predetermined number of logs obtained by obtainer 11 and executing statistical processing, such as calculating a mode, on the predetermined number of accumulated logs. Note that, for example, processing unit 12 may generate the pattern information with a trained model that has been trained with a large number of logs as training data, and that outputs the pattern information when receiving a log obtained by obtainer 11 as an input.

FIG. 36 is a table illustrating an example of generating the pattern information. In the example illustrated in FIG. 36, processing unit 12 generates, for example, pattern information indicating the activity pattern "Set timer of rice cooker to start cooking at around 7:00 on weekdays" and the activity pattern "Cooking is started at 16:00 on weekdays," based on a large number of logs indicating that the operations of "Setting timer of rice cooker to start cooking (16:00)" were performed on a rice cooker, and that the operations were performed during the time slot from 7:00 to 7:30 on weekdays. Processing unit 12 also generates pattern information indicating the activity pattern "Executing tub clean course at end of every month," based on a large number of logs indicating that the operations of executing "Tub clean course" were performed on a washing machine, and that the operations were performed during the time slot from 22:00 to 22:30 at the ends of months.

FIG. 37 is a table illustrating another example of generating the pattern information. In the example illustrated in FIG. 37, processing unit 12 generates, for example, pattern information indicating the activity pattern "Measuring body weight every day," based on a large number of logs indicating that the operations of "Measuring body weight" were performed on a weight scale, and that the operations were performed during the time slot from 6:30 to 7:00 every day. Processing unit 12 also generates, for example, pattern information indicating the activity pattern "Measuring blood pressure every day," based on a large number of logs indicating that the operations of "Measuring blood pressure" were performed on a blood pressure monitor, and that the operations were performed during the time slot from 6:30 to 7:00 every day. Here, these activity patterns are the same in time slot and are executed every day. Thus, processing unit 12 generates pattern information in which these activity patterns are integrated into the single activity pattern "Measuring body weight/blood pressure every day." The pattern information generated by processing unit 12 is stored in pattern DB 138 in storage device 13.

Referring back to FIG. 35, (1) when obtaining a log from device 2, task management system 100B (2) determines a task based on the log and registers the determined task to task DB 131. Task management system 100B also (3) determines the person in charge of the determined task (a target task) based on the condition information. Task management system 100B then (4) transmits, to information processing terminal 3 of user U1, notification information indicating that the task and its person in charge have been registered. The example illustrated in FIG. 35 shows that there are a plurality of users U1, and that the notification information is transmitted to information processing terminals 3 of the plurality of users U1. The plurality of users U1 constitute, for example, a family.

In addition, (1) when obtaining a log from device 2, task management system 100B (5) determines the urgent task by referring to the pattern information stored in storage device 13 (pattern DB 138). Task management system 100B then (6) transmits, to information processing terminal 3 of each user U1, urgent notification information indicating that the urgent task has been issued. Note that the processes of (2) to (4) described above need not be executed by task management system 100B.

FIG. 38 is a schematic diagram illustrating a notification example of the urgent notification information in task management system 100B according to Embodiment 3. In FIG. 38, (a) illustrates list information as the urgent notification information, and (b) illustrates notification information as the urgent notification information. In the example illustrated in (a) in FIG. 38, the content of the urgent task "Set timer of rice cooker to start cooking" is displayed on the display device of information processing terminal 3 as illustrated in the region enclosed with the broken line.

In the example illustrated in (b) in FIG. 38, a message indicating that an urgent task for the rice cooker has been issued and the hyperlink "Set timer of rice cooker" for setting the rice cooker to start a rice cooking operation through a remote operation are displayed on the display device of information processing terminal 3 as illustrated in the region enclosed with the broken line.

As seen from the above, processing unit 12 may make the urgent notification information include information for performing a remote operation of device 2 to be subjected to the urgent task (here, the rice cooker) before transmitting the urgent notification information to information processing terminal 3 of each user U1. Note that processing unit 12 may transmit the urgent notification information without the information for performing the remote operation to information processing terminals 3 of each user U1.

In the example illustrated in FIG. 38, the regions enclosed with broken lines may be displayed such that the regions are more highlighted than other regions. For example, in the case where character strings in the other regions are displayed in black, character strings in the regions enclosed with the broken lines may be displayed in red. For example, the regions enclosed with the broken lines may be displayed above the other regions on the display device.

### [2. Behavior]

The operation of task management system 100B (i.e., the task management method) according to Embodiment 3 will be described in detail below.

### [2-1. Basic operation example]

First, with reference to FIG. 39, the basic operation example of task management system 100B according to Embodiment 3 will be described. FIG. 39 is a flowchart illustrating the basic operation example of task management system 100B according to Embodiment 3. Here, the description will be given assuming that task management system 100B obtains a log from device 2. The description will be given also assuming that the number of users U1 is one.

When device 2 issues the log, device 2 transmits a signal including the issued log to server 1 (task management system 100B) over network N1. Accordingly, communicator (obtainer) 11 obtains the log over network N1 (S21).

Next, processing unit 12 generates pattern information indicating an activity pattern based on the log obtained by communicator (obtainer) 11 (S22). Step S22 need not be executed every time step S21 is executed. For example, step S22 may be executed whenever a predetermined number of logs obtained in step S21 are accumulated, for example.

Processing unit 12 next determines whether the activity pattern is included in a log of a predetermined time slot (S23). Here, processing unit 12 determines whether the activity pattern to be executed in the predetermined time slot is included in the log of the predetermined time slot by referring to the pattern information stored in storage device 13 (pattern DB 138).

When the activity pattern is not included in the log of the predetermined time slot (S23: No), processing unit 12 determines an urgent task (S24). Here, processing unit 12 determines the activity pattern as the urgent task.

Processing unit 12 then transmits, to information processing terminal 3 of user U1, urgent notification information indicating that the urgent task has been issued (S25). Note that when the activity pattern is included in the log of the predetermined time slot (S23: Yes), processing unit 12 does not execute steps S24 and S25.

Specific examples of the operation that can be executed by task management system 100B according to Embodiment 3 will be described below. Note that a first operation example and a second operation example shown below will be described assuming that the plurality of users U1 are two persons: "Dad" and "Mom." In addition, the first operation example and the second operation example shown below will be described assuming that the pattern information has already been generated. Task management system 100B may combine the first operation example and the second operation example described below and execute the combined operation as appropriate.

### [2-2. First operation example]

First, with reference to FIG. 40, the first operation example of task management system 100B according to Embodiment 3 will be described. FIG. 40 is a schematic diagram illustrating the first operation example of task management system 100B according to Embodiment 3. The first operation example is a specific example of the process in which processing unit 12 determines the urgent task by referring to the pattern information.

In the example illustrated in FIG. 40, device 2 is a rice cooker. Usually, the operation of "Setting timer of rice cooker to start cooking" is performed on the rice cooker during the time slot of 7:00 to 7:30, causing the rice cooker to transmit a signal including a log indicating that the operation of "Setting timer of rice cooker to start cooking" was performed during the time slot to task management system 100B. However, in the example illustrated in FIG. 40, the operation of "Setting timer of rice cooker to start cooking" is not performed during the time slot. Thus, the rice cooker does not transmit the signal including the log indicating that the operation of "Setting timer of rice cooker to start cooking" was performed during the time slot to task management system 100B.

Since the log does not include the activity pattern of "Setting timer of rice cooker to start cooking," processing unit 12 of task management system 100B determines the activity pattern of "Setting timer of rice cooker to start cooking" as the urgent task and transmits the urgent notification information to information processing terminal 3 of each user U1. In the example illustrated in FIG. 40, processing unit 12 usually determines whether the log includes the activity pattern of "Setting timer of rice cooker to start cooking" at a predetermined time period (here, 2 hours) before 16:00, which is the time point when the rice cooker usually starts the rice cooking operation.

In the example illustrated in FIG. 40, any one of the plurality of users U1 looks at the urgent notification information received by information processing terminal 3 to recognize that the urgent task of "Setting rice cooker to start cooking" has been issued, and performs the operation of "Setting timer of rice cooker to start cooking" on the rice cooker through a remote operation (i.e., completes the urgent task). Accordingly, the rice cooker starts the rice cooking operation at the set time point (here, 16:00).

Here, in the first operation example, the process executed by processing unit 12 differs between the case where the determined urgent task has not been registered in storage device 13 (task DB 131) and the case where the determined urgent task has already been registered.

FIG. 41 is a schematic diagram illustrating an example of the case where the determined urgent task has not been registered in the first operation example of task management system 100B according to Embodiment 3. In the example illustrated in FIG. 41, processing unit 12 determines the activity pattern "Setting timer of rice cooker to start cooking (16:00)" included in the pattern information stored in storage device 13 (pattern DB 138) as the urgent task. Since the task "Set timer of rice cooker to start cooking (16:00)" is not registered in storage device 13 (task DB 131), processing unit 12 registers the task "Set timer of rice cooker to start cooking (16:00)" with its priority being set as "High" in storage device 13. Accordingly, the task "Set timer of rice cooker to start cooking (16:00)" is registered as the urgent task in storage device 13.

FIG. 42 is a schematic diagram illustrating an example of the case where the determined urgent task has been registered in the first operation example of task management system 100B according to Embodiment 3. In the example illustrated in FIG. 42, processing unit 12 determines the activity pattern "Setting timer of rice cooker to start cooking (16:00)" included in the pattern information stored in storage device 13 (pattern DB 138) as the urgent task, as in the example illustrated in FIG. 41. Since the task "Set timer of rice cooker to start cooking (16:00)" has already been registered in storage device 13 (task DB 131), processing unit 12 updates the task "Set timer of rice cooker to start cooking" by changing its priority from "Middle" to "High." Accordingly, the task "Set timer of rice cooker to start cooking (16:00)" is registered as the urgent task in storage device 13.

As mentioned above, in the first operation example, in the case where a task that should usually be executed (an activity pattern) has not been executed, the task is determined as an urgent task, and urgent notification information is transmitted to information processing terminal 3 of each user U1. Therefore, in the first operation example, each user U1 easily realizes the task forgotten to be executed (the urgent task), making it likely to avoid a situation in which the task is left unexecuted.

### [2-3. Second operation example]

Next, with reference to FIG. 43, the second operation example of task management system 100B according to Embodiment 3 will be described. FIG. 43 is a schematic diagram illustrating the second operation example of task management system 100B according to Embodiment 3. The second operation example differs from the first operation example in that the urgent task is determined based further on environment information indicating a change in the environment for the one or more tasks registered in storage device 13 (task DB 131).

The environment information can include information indicating, for example, a change in the weather in the place where the target task is to be executed, such as a change from clear weather to rainy weather. For example, processing unit 12 can obtain the information by obtaining weather information via communicator (obtainer) 11 from a server that provides the weather information. The environment information can include information indicating a change in presence/absence of the person in charge of the target task caused by, for example, delay in the arrival of the person in charge of the target task at home due to transportation disruption such as train delay. For example, processing unit 12 can obtain the information by obtaining, via communicator 11, position information (e.g., positioning information from a positioning system such as the GPS) on information processing terminal 3 of the person in charge of the target task.

In the example illustrated in FIG. 43, the task "Take in laundry" has already been registered in storage device 13 (task DB 131). Here, in the case where processing unit 12 obtains weather information indicating that the weather will change from clear weather to rainy weather, processing unit 12 determines that the task should be preferentially executed. Processing unit 12 then registers the task as the urgent task by changing the priority of the task from "Middle" to "High."

Processing unit 12 also determines whether the person in charge of the urgent task is at home by referring to presence/absence information on each user U1 stored in storage device 13 (presence/absence DB 137). Here, "Dad," who is the person in charge of the task "Take in laundry", which is the urgent task, is not at home. Thus, processing unit 12 updates the person in charge of the urgent task by changing the person in charge of the urgent task to "Mom," who is at home. Processing unit 12 thereafter transmits the urgent notification information to information processing terminal 3 of each user U1. Accordingly, "Mom" can recognize that she should execute the task "Take in laundry", which is the urgent task.

As mentioned above, in the second operation example, an urgent task is determined based on a change in the environment for the one or more tasks registered in storage device 13 (task DB 131), and urgent notification information is transmitted to information processing terminal 3 of each user U1. Therefore, in the second operation example, each user U1 easily realizes the task that becomes necessary to be executed due to the change in the environment (the urgent task), making it likely to avoid a situation in which the task is left unexecuted.

In the description described above, the plurality of users U1 are assumed to be in one group such as a family. However, this is **not a limitation.** For example, as illustrated in FIG. 44, the plurality of users U1 may include a plurality of (here, two) groups. FIG. 44 is a schematic diagram illustrating an example of the notification destination of urgent notification information in task management system 100B according to Embodiment 3.

In the example illustrated in FIG. 44, "Group α" denotes a family, and "Group β" denotes grandparents. In this case, in the case where, for example, an urgent task is issued in "Group β," processing unit 12 of task management system 100B transmits the urgent notification information to not only information processing terminal 3 of each user U1 belonging to "Group β" but also information processing terminal 3 of each user U1 belonging to "Group α." Accordingly, each user U1 in "Group α" easily realizes that the urgent task has been issued in "Group β" and thus can execute the urgent task even when user U1 in "Group β" has forgotten to execute the urgent task.

### [3. Advantageous effects, etc.]

Advantageous effects of task management system 100B (the task management method) according to Embodiment 3 will be described below. As mentioned above, task management system 100B (the task management method) according to Embodiment 3 generates, based on an obtained log, pattern information indicating an activity pattern, which is to be executed on device 2 during a predetermined time slot. In the case where the obtained log does not include the activity pattern indicated by the pattern information in the predetermined time slot, task management system 100B (the task management method) according to Embodiment 3 determines the activity pattern as an urgent task. Therefore, in the case where a task that should usually be executed (an activity pattern) has not been executed, task management system 100B (the task management method) according to Embodiment 3 determines the task as the urgent task, thus bringing about such advantageous effects that each user U1 easily realizes the task forgotten to be executed (the urgent task), making it likely to avoid a situation in which the task is left unexecuted.

### (Variations)

As seen from the above, Embodiments 1 to 3 have been described as examples of techniques disclosed in the present application. However, the techniques in the present disclosure are not limited to them and are also applicable to Embodiments 1 to 3 that are subjected to modification, substitution, addition, omission, and the like as appropriate. Furthermore, the constituent elements described in Embodiments 1 to 3 described above can be combined to form new Embodiments 1 to 3.

Hence, variations of Embodiments 1 to 3 will be described below as examples.

In Embodiment 1 described above, task management system 100 has both the function of the registration function of registering a task determined based on the obtained log in storage device 13 (task DB 131) when the task is a new task and the update function of updating a task already registered in storage device 13 to the content of the determined task. However, this is not a limitation.

For example, task management system 100 may include only the registration function. That is, in the task management method, a log related to the state of device 2 is obtained through the communication with device 2 or the external system that manages device 2. In this task management method, a task to be executed by user U1 using device 2 is determined based on the obtained log. In this task management method, the determined task is registered in storage device 13.

Alternatively, task management system 100 may include only the update function. That is, in the task management method, a log related to the state of device 2 is obtained through the communication with device 2 or the external system that manages device 2. In this task management method, a task to be executed by user U1 using device 2 is determined based on the obtained log. In this task management method, the content of a task of the same type as the determined task registered in storage device 13 is updated to the content of the determined task.

In Embodiment 3 described above, processing unit 12 of task management system 100B may determine whether to transmit the urgent notification information based on, for example, schedule information indicating the schedule of each user U1. For example, when the schedule information indicates that users U1 will eat out in the case where processing unit 12 determines the task "Set rice cooker to start cooking" as the urgent task, processing unit 12 need not transmit the urgent notification information.

In Embodiment 3 described above, for example, processing unit 12 of task management system 100B may change the priority of each of the one or more tasks registered in storage device 13 (task DB 131) based on various types of information including the schedule information. For example, in the case where the schedule information indicates that a sports day will be held on the weekend, it is supposed that eggs are highly likely to be included in the lunch prepared for the sports day. Thus, processing unit 12 may increase the priority of the task "Buy (eggs)." For example, in the case where the task "Make fried rice" is registered in storage device 13, processing unit 12 may increase the priority of the task "Buy (eggs)" that is likewise registered in storage device 13.

In Embodiments 1 to 3 described above, task management systems 100, 100A, and 100B may be implemented with an apparatus or apparatuses other than server 1. For example, in Embodiments 1 to 3 described above, each of task management systems 100, 100A, and 100B is implemented as a single apparatus. However, each of task management systems 100, 100A, and 100B may be implemented with a plurality of apparatuses. In the case where the system is implemented with a plurality of apparatuses, the constituent elements of each of task management systems 100, 100A, and 100B may be deployed across the plurality of apparatuses in any arrangement. For example, in Embodiments 1 to 3 described above, some of the constituent elements of each of task management systems 100, 100A, and 100B may be provided in a facility where user U1 resides. That is, the present disclosure may be implemented by cloud computing or may be implemented by edge computing.

For example, all or some of the constituent elements of each of task management systems 100, 100A, and 100B in the present disclosure may be configured in the form of dedicated hardware or may be implemented by the execution of a software program suitable for each constituent element. Each constituent element may be implemented by a program executor such as a central processing unit (CPU) or a processor reading and executing a software program recorded in a recording medium such as a hard disk drive (HDD) or a semiconductor memory.

The constituent elements of each of task management systems 100, 100A, and 100B in the present disclosure may be configured in the form of one or more electronic circuits. The one or more electronic circuits may each be a general-purpose circuit or a dedicated circuit.

The one or more electronic circuits may include, for example, a semiconductor device, an integrated circuit (IC), or a large scale integration (LSI). The IC or the LSI may be integrated into a single chip or may be integrated into a plurality of chips. Here, the IC or the LSI may be called different names such as a system LSI, a very large scale integration (VLSI), or an ultra large scale integration (ULSI) in accordance with the degree of the integration. Alternatively, a field programmable gate array (FPGA), which is an LSI programmable after its manufacture, can be used for the same purpose.

General or specific aspects of the present disclosure may each be implemented in the form of a system, an apparatus, a method, an integrated circuit, or a computer program. Alternatively, the general or specific aspects may each be implemented in the form of a non-transitory computer readable recording medium with the computer program stored therein, such as an optical disk, an HDD, or a semiconductor memory. For example, the present disclosure may be implemented as a program for causing a computer to execute the task management method according to each of Embodiments 1 to 3 described above. The program may be recorded in a non-transitory computer readable recording medium such as a CD-ROM or may be distributed over a communication channel such as the Internet.

For example, the program is not limited to a program to be executed by a single computer and may be a program to be executed in a distributed manner by a plurality of computers.

As seen from the above, Embodiments 1 to 3 have been described as examples of techniques in the present disclosure. For this purpose, the accompanying drawing and detailed description are provided.

Accordingly, the constituent elements illustrated in the accompanying drawings or described in the detailed descriptions may include not only constituent elements that are essential to solving the problem but also constituent elements that are not essential to solving the problem but are provided to describe the technique described above. Therefore, the non-essential constituent elements should not be construed as being essential just because the non-essential constituent elements are illustrated in the accompanying drawings or described in the detailed descriptions.

Embodiments 1 to 3 mentioned above are for providing examples of the techniques in the present disclosure and can thus be subjected to various modifications, replacements, additions, omissions, and the like in the scope of the claims and equivalent scopes thereof.

### (Summary)

As described above, a task management method according to a first aspect includes: determining a person in charge of performing a target task included in a plurality of tasks from among a plurality of users U1, based on condition information indicating a condition related to a task to be performed by each of the plurality of users U1 (S11); and outputting information indicating the target task that is associated with user U1 determined as the person in charge (S13).

With this, since the person in charge of the target task is automatically determined based on the condition information, it is not necessary for a user performing the task management method to manually assign user U1 as the person in charge of the target task by using a user interface (UI) provided as an application or the like. As a result, it is possible to easily reduce a load of managing tasks.

In the task management method according to a second aspect, in the first aspect, in the determining, the person in charge is determined based on, as the condition information, a degree of performing, by each of the plurality of users U1, one or more tasks except the target task among the plurality of tasks.

With this, since the person in charge of the target task is determined based on a degree of performing tasks by each user U1, it is unlikely to cause a bias in particular user U1 to perform each task.

In the task management method according to a third aspect, in the first or second aspect, in the determining, the person in charge is determined based on, as the condition information, an in-charged state indicating a person in charge of a related task related to the target task, the related task being to be performed by user U1 among the plurality of users U1.

With this, it is possible to determine the same user U1 as a person in charge of two or more tasks, when it is efficient to perform the tasks together. As a result, the person in charge can more efficiently perform the tasks.

In the task management method according to a fourth aspect, in any one of the first to third aspects, in the determining, the person in charge is determined based on, as the condition information, a category of each of one or more tasks allocated to the plurality of users U1.

With this, since the person in charge of the target task is determined based on categories of tasks allocated to each user U1, it is unlikely that user U1 determined as the person in charge of the target task feels dissatisfied with the determination.

In the task management method according to a fifth aspect, in any one of the first to fourth aspects, in the determining, the person in charge is determined based on, as the condition information, who wins or loses in a game in which the plurality of users U1 participate to determine who is to be the person in charge.

With this, since the person in charge of the target task is determined based on who wins or loses in a game, it is unlikely that user U1 determined as the person in charge of the target task feels dissatisfied with the determination.

In the task management method according to a sixth aspect, in any one of the first to fifth aspects, the task management method further includes: when the person in charge has already been assigned to the target task, re-determining the person in charge of the target task based on environment information indicating a change in environment in which the target task is to be performed.

With this, since it is possible to change the person in charge of the target task based on a change in environments in which the target task is to be performed, it is more likely that appropriate user U1 performs the target task.

A program according to a seventh aspect is a program for causing one or more processors to execute the task management method according to any one of the first to sixth aspects.

With this, since the person in charge of the target task is automatically determined based on the condition information, it is not necessary for a user performing the task management method to manually assign user U1 as the person in charge by using a UI provided as an application or the like. As a result, it is possible to easily reduce a load of managing tasks.

Task management system 100A according to an eighth aspect includes: processing unit 12 that determines a person in charge of performing a target task included in a plurality of tasks from among a plurality of users U1, based on condition information indicating a condition related to a task to be performed by each of the plurality of users U1; and communication unit (obtainer) 11 that outputs information indicating the target task that is associated with user U1 determined by processing unit 12 as the person in charge.

With this, since the person in charge of the target task is automatically determined based on the condition information, it is not necessary for a user performing the task management method to manually assign user U1 as the person in charge by using a UI provided as an application or the like. As a result, it is possible to easily reduce a load of managing tasks.

### [Industrial Applicability]

The present disclosure is applicable to a system or the like that manages tasks to be executed by a user using devices.

### [Reference Signs List]

- 1: server
- 11: obtainer (communicator)
- 12: processing unit
- 13: storage device
- 131: task DB
- 132: task determination DB
- 133: task deletion DB
- 134: task selection DB
- 135: task update DB
- 136: condition DB
- 137: presence/absence DB
- 138: pattern DB
- 2: device
- 3: information processing terminal
- 100, 100A, 100B: task management system
- N1: network
- U1: user
- U11: first user
- U12: second user

## Claims

1. A task management method comprising:
determining a person in charge of performing a target task included in a plurality of tasks from among a plurality of users, based on condition information indicating a condition related to a task to be performed by each of the plurality of users; and
outputting information indicating the target task that is associated with a user determined as the person in charge.

2. The task management method according to claim 1, wherein
in the determining, the person in charge is determined based on, as the condition information, a degree of performing, by each of the plurality of users, one or more tasks except the target task among the plurality of tasks.

3. The task management method according to claim 1, wherein,
in the determining, the person in charge is determined based on, as the condition information, an in-charged state indicating a person in charge of a related task related to the target task, the related task being to be performed by a user among the plurality of users.

4. The task management method according to claim 1, wherein,
in the determining, the person in charge is determined based on, as the condition information, a category of each of one or more tasks allocated to the plurality of users.

5. The task management method according to claim 1, wherein,
in the determining, the person in charge is determined based on, as the condition information, who wins or loses in a game in which the plurality of users participate to determine who is to be the person in charge.

6. The task management method according to any one of claims 1 to 5, further comprising:
when the person in charge has already been assigned to the target task,
re-determining the person in charge of the target task based on environment information indicating a change in environment in which the target task is to be performed.

7. A program for causing one or more processors to execute the task management method according to any one of claims 1 to 5.

8. A task management system comprising:
a processing unit that determines a person in charge of performing a target task included in a plurality of tasks from among a plurality of users, based on condition information indicating a condition related to a task to be performed by each of the plurality of users; and
a communication unit that outputs information indicating the target task that is associated with a user determined by the processing unit as the person in charge.
